# EUROPEAN PATENT APPLICATION

(11) **EP 2 717 161 A1**
(43) Date of publication of application: **09.04.2014**
(21) Application number: 12790307.8
(22) Date of filing: 21.05.2012
(51) Int. Cl.: G06F 9/50, G06F 9/46, H04L 12/46, H04L 12/66

(54) **SYSTEM FOR PROVIDING VIRTUAL MACHINES**

(30) Priority: 24.05.2011 JP 2011115911
(71) Applicant: The Intelligent Willpower Corporation, Tokyo 106-0041 (JP)
(72) Inventor: YOSHIMURA Shin, Tokyo 106-0041 (JP); FUJIWARA Toshiki, Tokyo 106-0041 (JP)
(74) Representative: Ashton, Gareth Mark
(86) International application number: PCT/JP2012/062888
(87) International publication number: WO 2012/161146

(57) **Abstract**

There is provided a system for providing virtual machines which enables users to effectively use the virtual machines without any waste. The system (10) for providing virtual machines is configured to include first to n-th virtual routers (14₁ to 14ₙ) virtualized on a physical router (11), first to n-th virtual firewalls (15₁ to 15ₙ) virtualized on a physical firewall (12), and a plurality of virtual machines (16₁ to 16ₙ) virtualized on physical server (13). The system (10) executes a virtual machine generating means for generating the virtual machines (16₁ to 16ₙ) on the physical server (13) in accordance with a request of the user, and a first virtual machine assigning means for assigning the generated virtual machines (16₁ to 16ₙ) to the user.

## Description

### Technical Field

The present invention relates to a system for providing virtual machines that provides virtual machines virtualized on a physical server to each user.

### Background Art

There is a virtual server distributed arrangement method including: generating server arrangement data that represents correspondence relation between a virtual server identifier representing each one of a plurality of virtual servers and a physical server identifier representing each one of a plurality of physical servers arranging the virtual servers in a distributed manner; generating virtual server configuration data that represents correspondence relation between a virtual server identifier and a group identifier used for identifying a user group using the virtual server; calculating an evaluation value of the virtual server arrangement that is arranged in accordance with the server arrangement data based on the virtual server identifier and the group identifier; and displaying a plurality of candidates for the virtual server arrangement based on the calculated evaluation values (see Patent Literature 1). According to this virtual server distributed arrangement method, virtual computers can be appropriately arranged for a physical computer, and thereby a loss in the user section can be minimized.

### Citation List

### Patent Literature

Patent Literature 1: JP 2008-140240 A

### Summary of Invention

### Technical Problem

According to the virtual server distributed arrangement method disclosed in Patent Document 1 described above, the virtual servers are not assigned separately to each user based on the use frequency, the use form and the user method of a user using the virtual servers, and the virtual servers cannot allow users to effectively use the virtual servers without any waste in correspondence with the use frequency and the use form of the virtual server, and the use method of each user. In addition, virtual servers having mutually-different capacities cannot be assigned to each user in accordance with a request of the user, and virtual servers having mutually-different capacities corresponding to the use frequency, the use form, and the use method of each user cannot be used by the user. According to this virtual server distributed arrangement method, the virtual servers are visualized for users using the virtual servers, and a virtual server of one user may be changed by another user, and thereby it is difficult to acquire the security of the virtual servers.

The present invention is directed to provide a system for providing virtual machines that can assign virtual machines to users based on the use frequencies, the use forms, and the use methods of the users using the virtual machines and enables the users to effectively use the virtual machines without any waste. Furthermore, the present invention is directed to provide a system for providing virtual machines that can assign virtual machines having mutually-different capacities corresponding to the use frequencies, the use forms, and the use methods of the users to the users and enables the users to use the virtual machines having mutually-different capacities. In addition, the present invention is directed to provide a system for providing virtual machines that can prevent the virtual server of each user from being changed and can acquire the security of virtual servers.

### Solution to Problem

A premise of the present invention for solving the above-described problem is a system for providing virtual machines that provides virtual machines virtualized on a physical server for each user

On the above-described premise, according to an aspect of the present invention, there is provided a system for providing virtual machines including: first to n-th virtual routers that are virtualized on at least one physical router; first to n-th virtual firewalls that are individually connected to the first to n-th virtual routers through global networks and are virtualized on at least one physical firewall; and a plurality of virtual machines that are connected to the first to n-th virtual firewalls through private networks and are virtualized on at least one physical server, wherein the system for providing the virtual machines executes a virtual machine generating means for generating the virtual machines on the physical server in accordance with a request of the user and a first virtual machine assigning means for assigning the generated virtual machines to the user.

As an example of the present invention, the system for providing the virtual machines further includes a capacity setting means for setting capacities of the virtual machines generated by the virtual machine generating means for the virtual machines.

As another example of the present invention, the system for providing virtual machines further includes a first IP address setting means that generates a predetermined IP address for each one of the virtual machines assigned by the first virtual machine assigning means and sets the generated IP address to each one of the virtual machines.

As another example of the present invention, the system for providing the virtual machines further includes a first capacity visualizing means for allowing the capacities of the virtual machines assigned by the first virtual machine assigning means to be individually visualized for each user and allowing the capacities to be non-visible to the other users.

As another example of the present invention, the system for providing the virtual machines further includes a first virtual machine removing means for removing unnecessary virtual machines out of the virtual machines assigned by the first virtual machine assigning means in accordance with a request of the user.

As another example of the present invention, the system for providing the virtual machines further includes: a clone generating means for generating clones of virtual machines that are the same as the virtual machines that have already been generated in accordance with a request of the user; a second virtual machine assigning means for assigning the generated clones of the virtual machine to the user; and a second IP address setting means for generating predetermined IP addresses for the clones of the virtual machines assigned by the second virtual machine assigning means and individually sets the generated IP addresses to the clones of the virtual machines.

As another example of the present invention, the system for providing the virtual machines further includes a second capacity visualizing means for allowing the capacities of the clones of the virtual machines assigned by the second virtual machine assigning means to be individually visualized for each user and allowing the capacities to be non-visible to the other users.

As another example of the present invention, the system for providing the virtual machines further includes a second virtual machine removing means for removing unnecessary clones of virtual machines out of the clones of the virtual machines assigned by the second virtual machine assigning means in accordance with a request of the user.

As another example of the present invention, the system for providing the virtual machines further includes a private network setting means for setting a private network connecting the virtual firewalls, the virtual machines, and the clones together in accordance with a request of the user.

As another example of the present invention, the private network setting means divides the virtual machines and the clones connected to a specific virtual firewall into two or more groups in accordance with a request of the user and sets a plurality of the private networks that connect the virtual firewalls and the groups together.

As another example of the present invention, the system for providing the virtual machines further includes a private network changing means that adds, changes, or removes the private network connecting the virtual firewalls, the virtual machines, and the clones together in accordance with a request of the user.

As another example of the present invention, the system for providing the virtual machines further includes a console function setting means for setting a console function to the virtual machines and the clones in accordance with a request of the user.

As another example of the present invention, the capacities of the virtual machines and the clones are the numbers of central processing units used therein, and the system for providing the virtual systems further includes: a capacity changing means for subsequently increasing or decreasing the number of the central processing units in accordance with a request of the user; and a capacity change visualizing means for allowing the numbers of the central processing units, which have been increased or decreased by the capacity changing means, to be individually visualized for each user and allowing the numbers of the central processing units to be non-visible to the other users.

As another example of the present invention, the capacities of the virtual machines and the clones are memory sizes thereof, the capacity changing means subsequently increases or decreases the memory sizes in accordance with a request of the user; and a capacity change visualizing means allows the memory sizes, which have been increased or decreased by the capacity changing means, to be individually visualized for each user and allows the memory sizes to be non-visible to the other users.

As another example of the present invention, the capacities of the virtual machines and the clones are the capacities of hard disks used therein, the capacity changing means subsequently increases or decreases the capacities of the hard disks in accordance with a request of the user, and the capacity visualizing means allows the capacities of the hard disks, which have been increased or decreased by the capacity changing means, to be individually visualized for each user and allows the capacities of the hard disks to be non-visible to the other users.

As another example of the present invention, the system for providing the virtual machines further includes an operating status visualizing means for allowing operating statuses of the virtual machines and the clones assigned to the users to be individually visualized for each user and allowing the operating statuses to be non-visible to the other users.

As another example of the present invention, the operating statuses of the virtual machines and the clones are past or present memory use rates of each one of the virtual machines and each one of the clones, and the operating status visualizing means allows the memory use rates to be individually visualized for each user and allows the memory use rates to be non-visible to the other users.

As another example of the present invention, the operating status visualizing means visualizes the memory use rates in time series.

As another example of the present invention, the operating statuses of the virtual machines and the clones are past or present use rates of central processing units of each one of the virtual machines and each one of the clones, and the operating status visualizing means allows the use rates of the central processing units to be individually visualized for each user and allowing the use rates to be non-visible to the other users.

As another example of the present invention, the operating status visualizing means visualizes the use rates of the central processing units in time series.

As another example of the present invention, the operating statuses of the virtual machines and the clones are past or present private network use rates of each one of the virtual machines and each one of the clones, and the operating status visualizing means allows the private network use rates to be individually visualized for each user and allows the network use rates to be non-visible to the other users.

As another example of the present invention, the operating status visualizing means visualizes the private network use rates in time series.

As another example of the present invention, the operating statuses of the virtual machines and the clones are an operating time, latest power-on date and time, and latest power-off date and time of each one of the virtual machines and each one of the clones, and the operating status visualizing means allows the operating time, the power-on date and time, and the power-off date and time to be individually visualized for each user and allows the operating time, the power-on date and time, and the power-off date and time to be non-visible to the other users.

### Advantageous Effects of Invention

A system for providing virtual machines according to the present invention is formed by first to n-th virtual routers that are virtualized on a physical router, first to n-th virtual firewalls that are connected to the first to n-th virtual routers and are virtualized on a physical firewall, and a plurality of virtual machines that are connected to the first to n-th virtual firewalls and are virtualized on a physical server and executes a virtual machine generating means that generates the virtual machines and a first virtual machine assigning means that assigns the generated virtual machines to users. Accordingly, since each virtual machine can be freely assigned in accordance with the use form, the use frequency, the use method, and the like of a user using the virtual machine, a virtual machine that is not necessary to the user is not assigned, and the virtual machines can be effectively used without any waste in an optimal environment by users. According to this system for providing virtual machines, a user can provide various services through the Internet and can receive various services through the Internet, using the virtual machines.

According to a system for providing the virtual machines that further includes a capacity setting means for setting capacities of the virtual machines generated by the virtual machine generating means for the virtual machines, mutually-different capacities can be set to the virtual machines. Accordingly, since virtual machines having different capacities can be freely assigned in accordance with the use form, the use frequency, the use method, and the like of a user using the virtual machine, a virtual machine having performance that is not necessary to the user or a virtual machine having insufficient performance is not assigned, and the virtual machines 16₁ to 16ₙ having optimal capacities can be used by the users.

According to a system for providing virtual machines that further includes a first IP address setting means for generating predetermined IP addresses for the virtual machines assigned by the first virtual machine assigning means and setting the generated IP addresses respectively to the virtual machines, predetermined IP addresses are individually set respectively to the virtual machines. Accordingly, the virtual machines are connected to the Internet using the IP addresses, and each user can receive various services provided through the Internet. This system for providing virtual machines can access the virtual machines from the Internet side using the IP addresses, and the virtual machine assigned to each user can be used for providing various services through the Internet.

According to a system for providing virtual machines that further includes a first capacity visualizing means for allowing the capacities of the virtual machines assigned by the first virtual machine assigning means to be individually visualized for each user and allowing the capacities to be non-visible to the other users, the capacity of a virtual machine of a user using the virtual machine is not visualized for the other users, and the privacy of each user can be protected. In addition, the addition or the removal of the virtual machine of the user, the addition, the change, the removal of the capacity of the virtual machine, or a change in the IP address of the virtual machine such as the addition, the change, or the removal thereof can be prevented from being performed by the other users, and accordingly, the security of the virtual machines assigned to each user can be reliably secured.

According to a system for providing virtual machines that further includes a first virtual machine removing means for removing unnecessary virtual machines out of the virtual machines assigned by the first virtual machine assigning means in accordance with a request of the user, the virtual machines out of the assigned virtual machines that become unnecessary can be freely removed by the user based on a request of the user. Accordingly, the waste of the virtual machines can be prevented with the use form, the use frequency, the use method, and the like of the virtual machines being considered, whereby the virtual machines can be effectively used without any waste in an optimal environment.

According to a system for providing virtual machines that further includes: a second virtual machine assigning means for generating clones (copies) of virtual machines that are the same as the virtual machines that have already been generated in accordance with a request of the user, and assigning the generated clones of the virtual machine to the user; and a second IP address setting means for generating predetermined IP addresses for the clones of the virtual machines assigned by the second virtual machine assigning means and individually sets the generated IP addresses to the clones of the virtual machines, a clone that is the same as a virtual machine that has already been present can be generated. Accordingly, by freely copying the virtual machine having the same function, a plurality of virtual machines having the same function can be generated in a speedy manner. By generating a plurality of virtual machines having the same function in accordance with a user's request, the system for providing virtual machines can respond to the use form, the use frequency, the use method, and the like of the virtual machine of the user in a speedy manner. Since the system for providing virtual machines individually sets predetermined IP addresses to the clones of the virtual machines, the clones of the virtual machines can be connected to the Internet using the IP addresses and, each user can receive various services provided through the Internet. Since this system for providing virtual machines can access the clones of the virtual machines from the Internet side using the IP addresses, the clones of the virtual machines assigned to the users can be used for providing various services through the Internet.

According to a system for providing virtual machines that includes a second capacity visualizing means for allowing the capacities of the clones of the virtual machines assigned by the second virtual machine assigning means to be individually visualized for each user and allowing the capacities to be non-visible to the other users, the capacity of the clone of a virtual machine of a user using the clone of the virtual machine is not visualized for the other users, and the privacy of each user can be protected. In addition, the addition or the removal of the clone of the virtual machine of the user, the addition, the change, the removal of the capacity of the clone of the virtual machine, or a change in the IP address of the clone of the virtual machine such as the addition, the change, or the removal thereof can be prevented from being performed by the other users, and accordingly, the security of the clones of the virtual machines assigned to each user can be reliably secured.

According to a system for providing virtual machines that further includes a second virtual machine removing means for removing unnecessary clones of virtual machines out of the clones of the virtual machines assigned by the second virtual machine assigning means in accordance with a request of the user, the clones of the virtual machines out of the clones of the assigned virtual machines that become unnecessary can be freely removed by the user based on a request of the user. Accordingly, the waste of the clones of the virtual machines can be prevented with the use frequency, the use form, the use method, and the like of the clones of the virtual machines being considered, whereby the virtual machines can be effectively used without any waste in an optimal environment.

According to a system for providing virtual machines that further includes a private network setting means for setting a private network connecting the virtual firewalls, the virtual machines, and the clones together in accordance with a request from the user, a private network that can be used by a user can be set for each user. Accordingly, an aggregation of the virtual machines or the clones connected using the private network for each user can be generated, and the virtual machines or the clones connected to the private network are not visualized for the other users. Therefore, while a request for allowing the virtual machines or the clones of each user to be non-visible is satisfied, a request for using the private network in this system can be responded in a speedy manner.

According to a system for providing the virtual machines in which the private network setting means divides the virtual machines and the clones connected to a specific virtual firewall into two or more groups in accordance with a request of the user and sets a plurality of the private networks that connect the virtual firewalls and the groups together, a user can maintain a plurality of private networks connecting the virtual firewalls, the virtual machines, and the group of the clones in accordance with a user's request. In this system for providing virtual machines, since each user can use a plurality of private networks, groups of the virtual machines or the clones that are used for different purposes can be generated. Therefore, while a request for allowing the group of the virtual machines or the clones connected to the private network to be non-visible is satisfied, a request for using a plurality of private networks connecting groups of the virtual machines or the clones used for different purposes can be responded in a speedy manner.

According to a system for providing virtual machines that further includes a private network changing means that adds, changes, or removes the private network in accordance with a request of the user, a private network that is newly desired to be used can be added in accordance with a user's request. Accordingly, a request for using a new private network in the system can be responded in a speedy manner. Since the system for providing virtual machines can change the private network in accordance with a user's request, a request for changing the private network in the system can be responded in a speedy manner, and accordingly, an aggregation of the virtual machines or the clones connected using the changed private network can be generated. Since the system for providing virtual machines can remove the private network in accordance with a user's request, unnecessary private networks can be removed with the use form, the use frequency, the use method, and the like of the virtual machines or the clones being considered, whereby a request for removing the private network in the system can be responded in a speedy manner.

According to a system for providing the virtual machines that further includes a console function setting means for setting a console function to the virtual machines and the clones in accordance with a request of the user, a virtual console function can be implemented in each virtual machine or each clone. Accordingly, another device connected to each virtual machine or each clone through the private network can be used as a console.

According to a system for providing virtual machines in which the capacities of the virtual machines and the clones are the numbers of central processing units used therein, further including: a capacity changing means for subsequently increasing or decreasing the number of the central processing units in accordance with a request of the user; and a capacity change visualizing means for allowing the numbers of the central processing units, which have been increased or decreased by the capacity changing means, to be individually visualized for each user and allowing the numbers of the central processing units to be non-visible to the other users, virtual machines or clones of which the numbers of central processing units are different can be assigned in accordance with the use form, the use frequency, the use method, and the like of the virtual machine or the clone of each user, and a virtual machine or a clone having an unnecessary function for the user is not assigned. Therefore, the virtual machines or the clones can be effectively used without any waste in an optimal environment by the user. In addition, since the system for providing virtual machines can increase or decrease the number of the central processing units subsequently in accordance with a user's request, the performance-up or performance-down of the virtual machine or the clone can be performed in accordance with the use frequency, the use form, the use method, and the like of the virtual machine or the clone, and accordingly, the user can use virtual machines or clones matching the user's needs. Since this system for providing virtual machines allows the number of the central processing units or the increased or decreased number of the central processing units to be non-visible to the other users, the numbers of the central processing units of the virtual machines or the clones of a user using the virtual machines or the clones are not visualized for the other users, and the privacy of each user can be protected. In addition, since an arbitrary increase or decrease in the number of the central processing units of the user that is made by the other users can be prevented, the security of the virtual machines or the clones assigned to each user can be reliably secured.

According to a system for providing the virtual machines in which the capacities of the virtual machines and the clones are memory sizes thereof, the capacity changing means subsequently increases or decreases the memory sizes in accordance with a request of the user, and a capacity change visualizing means allows the memory sizes, which have been increased or decreased by the capacity changing means, to be individually visualized for each user and allows the memory sizes to be non-visible to the other users, virtual machines or clones of which the memory sizes are different can be assigned in accordance with the use form, the use frequency, the use method, and the like of the virtual machine or the clone of each user, and a virtual machine or a clone having an unnecessary function for the user is not assigned. Therefore, the virtual machines or the clones can be effectively used without any waste in an optimal environment by the user. In addition, since the system for providing virtual machines can increase or decrease the memory size subsequently in accordance with a user's request, the performance-up or performance-down of the virtual machine or the clone can be performed in accordance with the use frequency, the use form, the use method, and the like of the virtual machine or the clone, and accordingly, the user can use virtual machines or clones matching the user's needs. Since this system for providing virtual machines allows the memory size or the increased or decreased memory size to be non-visible to the other users, memory sizes of the virtual machines or the clones of a user using the virtual machines or the clones are not visualized to the other users, and the privacy of each user can be protected. In addition, since an arbitrary increase or decrease in the memory size of the user that is made by the other users can be prevented, the security of the virtual machines or the clones assigned to each user can be reliably secured.

According to a system for providing the virtual machines in which the capacities of the virtual machines and the clones are the capacities of hard disks used therein, the capacity changing means subsequently increases or decreases the capacities of the hard disks in accordance with a request of the user, and the capacity change visualizing means allows the capacities of the hard disks, which have been increased or decreased by the capacity changing means, to be individually visualized for each user and allows the capacities of the hard disks to be non-visible to the other users, virtual machines or clones of which the hard disk capacities are different can be assigned in accordance with the use form, the use frequency, the use method, and the like of the virtual machine or the clone of each user, and a virtual machine or a clone having an unnecessary function for the user is not assigned. Therefore, the virtual machines or the clones can be effectively used without any waste in an optimal environment by the user. In addition, since the system for providing virtual machines can increase or decrease the hard disk capacity subsequently in accordance with a user's request, the performance-up or performance-down of the virtual machine or the clone can be performed in accordance with the use frequency, the use form, the use method, and the like of the virtual machine or the clone, and accordingly, the user can use virtual machines or clones matching the user's needs. Since this system for providing virtual machines allows the hard disk capacity of the virtual machine or the clone or the increased or decreased hard disk capacity to be non-visible to the other users, hard disk capacities of the virtual machines or the clones of a user using the virtual machines or the clones are not visualized for the other users, and the privacy of each user can be protected. In addition, since an arbitrary increase or decrease in the hard disk capacity of the user that is made by the other users can be prevented, the security of the virtual machines or the clones assigned to each user can be reliably secured.

According to a system for providing the virtual machines that further includes an operating status visualizing means for allowing operating statuses of the virtual machines and the clones assigned to the users to be individually visualized for each user and allowing the operating statuses to be non-visualized for the other users, the operating statuses of the virtual machines or the clones can be allowed to be individually visualized for each user. Accordingly, since each user can acquire the operating status of each virtual machine or each clone, the performance-up or performance-down of the virtual machine or the clone can be accurately determined, and the addition or the removal of the virtual machine or the clone can be accurately determined. In addition, since the system for providing virtual machines allows the operating statuses of the virtual machines or the clones to be non-visible to the other users, the operating statuses of the virtual machines or the clones are not acquired by the other users, and the operating status of each user can kept in secret. Therefore, the privacy of each user at the time of using the virtual machines or the clones can be protected, and various changes in the virtual machines or the clones that are made by the other users can be prevented, whereby the security of the virtual machines or the clones assigned to each user can be reliably secured.

According to a system for providing virtual machines in which the operating statuses of the virtual machines and the clones are past or present memory use rates of each one of the virtual machines and each one of the clones, and the operating status visualizing means allows the memory use rates to be individually visualized for each user and allows the memory use rates to be non-visualized for the other users, the memory use rates of the virtual machines or the clones are individually displayed for each user. Accordingly, the memory use rate of each virtual machine or each clone can be acquired by each user, and the maintenance of the memory of the virtual machine or the clone or an increase or decrease in the memory can be accurately determined. Since this system for providing virtual machines allows the memory use rates of the virtual machines or the clones to be non-visible to the other users, the memory use rates of the virtual machines or the clones are not acquired by the other users, and the memory use state of each user can be kept in secret. Accordingly, the privacy of each user at the time of using the virtual machines or the clones can be protected. In addition, since an arbitrary increase or decrease in the memory of the virtual machine or the clone that is made by the other users can be prevented, the security of the virtual machines or the clones assigned to each user can be reliably secured.

According to a system for providing the virtual machines in which the operating status visualizing means visualizes the memory use rates in time series, the past to present memory use rates are individually displayed for each user in time series. Accordingly, the memory use rate of each virtual machine or each clone for every month, every date, and every hour can be acquired by each user, and the maintenance of the memory of the virtual machine or the clone or an increase or decrease in the memory can be accurately determined. Since this system for providing virtual machines allows the time-series memory use rates of the virtual machines or the clones to be non-visible to the other users, the memory use rates of the virtual machines or the clones are not acquired by the other users, and the memory use state of each user in time series can be kept in secret. Accordingly, the privacy of each user at the time of using the virtual machines or the clones can be protected. In addition, since an arbitrary increase or decrease in the memory of the virtual machine or the clone that is made by the other users can be prevented, the security of the virtual machines or the clones assigned to each user can be reliably secured.

According to a system for providing the virtual machines in which the operating statuses of the virtual machines and the clones are past or present use rates of central processing units of each one of the virtual machines and each one of the clones, and the operating status visualizing means allows the use rates of the central processing units to be individually visualized for each user and allowing the use rates to be non-visualized for the other users, the use rates of the central processing units of the virtual machines or the clones are individually displayed for each user. Accordingly, the use rate of the central processing unit of each virtual machine or each clone can be acquired by each user, and the maintenance of the number of the central processing units of the virtual machine or the clone or an increase or decrease in the number of the central processing units can be accurately determined. Since this system for providing virtual machines allows the use rates of the central processing units of the virtual machines or the clones to be non-visible to the other users, the use rates of the central processing units of the virtual machines or the clones are not acquired by the other users, and the use state of the central processing units of each user can be kept in secret. Accordingly, the privacy of each user at the time of using the virtual machines or the clones can be protected. In addition, since an arbitrary increase or decrease in the number of the central processing units of the virtual machine or the clone that is made by the other users can be prevented, the security of the virtual machines or the clones assigned to each user can be reliably secured.

According to a system for providing the virtual machines in which the operating status visualizing means visualizes the use rates of the central processing units in time series, the past to present use rates of the central processing units are individually displayed for each user in time series. Accordingly, the use rate of the central processing unit of each virtual machine or each clone for every month, every date, and every hour can be acquired by each user, and the maintenance of the number of the central processing units of the virtual machine or the clone or an increase or decrease in the number of the central processing units can be accurately determined. Since this system for providing virtual machines allows the time-series use rates of the central processing units of the virtual machines or the clones to be non-visible to the other users, the use rates of the central processing units of the virtual machines or the clones are not acquired by the other users, and the use state of the central processing unit of each user in time series can be kept in secret. Accordingly, the privacy of each user at the time of using the virtual machines or the clones can be protected. In addition, since an arbitrary increase or decrease in the number of the central processing units of the virtual machine or the clone that is made by the other users can be prevented, the security of the virtual machines or the clones assigned to each user can be reliably secured.

According to a system for providing the virtual machines in which the operating statuses of the virtual machines and the clones are past or present private network use rates of each one of the virtual machines and each one of the clones, and the operating status visualizing means allows the private network use rates to be individually visualized for each user and allows the network use rates to be non-visualized for the other users, the use rates of the private networks of the virtual machines or the clones are individually displayed for each user. Accordingly, the use rate of the private network of each virtual machine or each clone can be acquired by each user, and the maintenance of the private networks of the virtual machine or the clone or the addition, the change, the removal of the private network can be accurately determined. Since this system for providing virtual machines allows the use rates of the private networks of the virtual machines or the clones to be non-visible to the other users, the use rates of the private networks of the virtual machines or the clones are not acquired by the other users, and the use state of the private network of each user can be kept in secret. Accordingly, the privacy of each user at the time of using the private networks can be protected. In addition, since arbitrary addition, change, or removal of the private networks that is made by the other users can be prevented, the security of the virtual machines or the clones assigned to each user can be reliably secured.

According to a system for providing the virtual machines in which the operating status visualizing means visualizes the private network use rates in time series, the past to present use rates of the private networks are individually displayed for each user in time series. Accordingly, the use rate of the private network of each virtual machine or each clone for every month, every date, and every hour can be acquired by each user, and the maintenance of the private networks of the virtual machine or the clone or the addition, the change, or the removal of the private network can be accurately determined. Since this system for providing virtual machines allows the time-series use rates of the private networks of the virtual machines or the clones to be non-visible to the other users, the use rates of the private networks of the virtual machines or the clones are not acquired by the other users, and the use state of the private network of each user in time series can be kept in secret. Accordingly, the privacy of each user at the time of using the private networks can be protected. In addition, since arbitrary addition, change, or removal of the private network that is made by the other users can be prevented, the security of the virtual machines or the clones assigned to each user can be reliably secured.

According to a system for providing the virtual machines in which the operating statuses of the virtual machines and the clones are an operating time, latest power-on date and time, and latest power-off date and time of each one of the virtual machines and each one of the clones, and the operating status visualizing means allows the operating time, the power-on date and time, and the power-off date and time to be individually visualized for each user and allows the operating time, the power-on date and time, and the power-off date and time to be non-visualized for the other users, the operating time, the power-on date and time, and the power-off date and time of each virtual machine or each clone are individually displayed for each user. Accordingly, the operating time, the power-on date and time, and the power-off date and time of each virtual machine or each clone can be acquired by each user, and the addition, or removal of the virtual machine or the clone, or the addition, change, or removal of the capacity of the virtual machine or the clone can be accurately determined. Since this system for providing virtual machines allows the operating time, the power-on date and time, and the power-off date and time of each virtual machine or each clone to be non-visible to the other users, the operating time, the power-on date and time, and the power-off date and time of each virtual machine or each clone are not acquired by the other users, and the use state of the virtual machines or the clones of each user can be kept in secret. Accordingly, the privacy of each user can be protected. In addition, since addition, or removal of the virtual machine or the clone that is made by the other users, or the addition, change, or removal of the capacity of the virtual machine or the clone can be prevented, the security of the virtual machines or the clones assigned to each user can be reliably secured.

### Brief Description of Drawings

Fig. 1 is a conceptual diagram that illustrates the configuration of a system for providing virtual machines as an example.
Fig. 2 is a conceptual diagram that illustrates the configuration of a system for providing virtual machines as another example.
Fig. 3 is a conceptual diagram that illustrates the configuration of a system for providing virtual machines as another example.
Fig. 4 is a conceptual diagram that illustrates the configuration of a system for providing virtual machines as another example.
Fig. 5 is a diagram that illustrates an example of a login screen.
Fig. 6 is a diagram that illustrates an example of an initial screen.
Fig. 7 is a diagram that illustrates an example of a new user registration screen.
Fig. 8 is a diagram that illustrates an example of a registered user information list screen.
Fig. 9 is a diagram that illustrates an example of a network information setting screen.
Fig. 10 is a diagram that illustrates an example of a virtual machine setting screen.
Fig. 11 is a diagram that illustrates an example of a virtual machine list screen.
Fig. 12 is a diagram that illustrates an example of a virtual machine capacity change screen.
Fig. 13 is a diagram that illustrates an example of a clone generation screen.
Fig. 14 is a diagram that illustrates an example of a network list screen.
Fig. 15 is a diagram that illustrates an example of a network detail screen.
Fig. 16 is a diagram that illustrates an example of a network addition screen.
Fig. 17 is a diagram that illustrates an example of a network change screen.
Fig. 18 is a diagram that illustrates an example of a network removal screen.
Fig. 19 is a diagram that illustrates an example of an event log display screen.
Fig. 20 is a diagram that illustrates an example of an event log display screen for each user.
Fig. 21 is a diagram that illustrates an example of an operating status display screen.
Fig. 22 is a diagram that illustrates an example of the operating status display screen for each machine.
Fig. 23 is a diagram that illustrates an example of a memory use rate time-series display screen for each machine.
Fig. 24 is a diagram that illustrates an example of a CPU use rate time-series display screen for each machine.
Fig. 25 is a diagram that illustrates an example of a private network use rate time-series display screen.
Fig. 26 is a diagram that illustrates an example of a login screen.
Fig. 27 is a diagram that illustrates an example of a user initial screen.
Fig. 28 is a diagram that illustrates an example of a user virtual machine list screen.
Fig. 29 is a diagram that illustrates an example of a user network detail screen.
Fig. 30 is a diagram that illustrates an example of an event log display screen for each user.
Fig. 31 is a diagram that illustrates an example of a user operating status display screen.

### Description of Embodiment

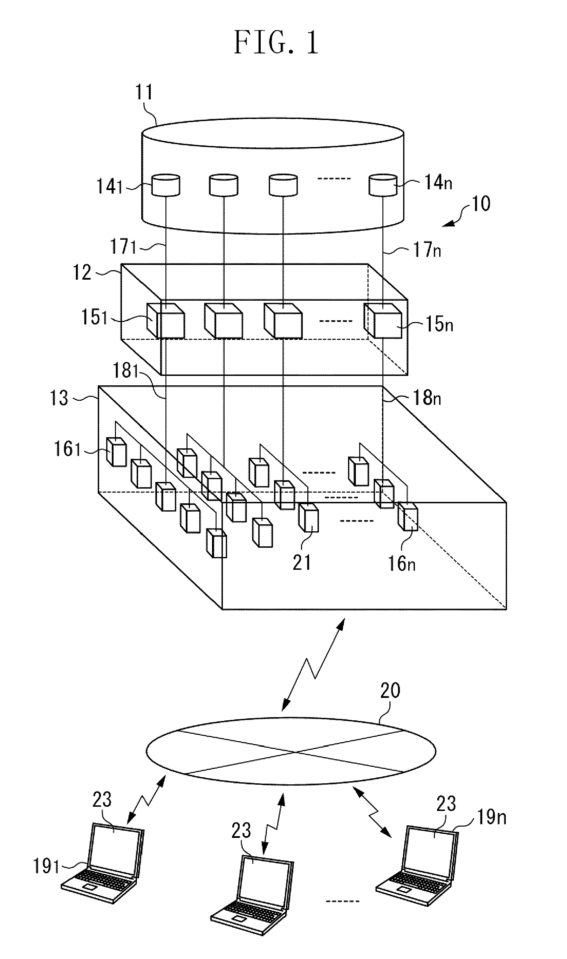

A system for providing virtual machines according to the present invention will be described in detail as below with reference to the accompanying drawings such as Fig. 1, which is a conceptual diagram of a system 10 for providing virtual machines illustrated as an example, and the like. This system 10 is installed to a data center of a management company that manages the system and provides virtual machines 16₁ to 16ₙ virtualized on a physical server 13 to be described later for users.

The system 10 for providing virtual machines illustrated in Fig. 1 is configured by hardware that is physically present (exists) and virtualized hardware. The physical hardware is configured by one physical security router 11, one physical firewall 12, and one physical server 13. In the system 10 illustrated in Fig. 1, one physical server 13 is connected to one physical firewall 12. The virtualized hardware is formed by 1st to n-th virtual routers 14₁ to 14ₙ (1st to n-th virtual routers) virtualized on one physical security router 11, 1st to n-th virtual firewalls 15₁ to 15ₙ (1st to n-th virtual firewalls) virtualized on one physical firewall 12, and a plurality of virtual machines 16₁ to 16ₙ (virtual servers) virtualized on one physical server 13.

The physical security router 11 and the physical firewall 12 are connected to each other through a global network. The physical firewall 12 and the physical server 13 are connected to each other through a private network. The 1st to n-th virtual firewalls 15₁ to 15ₙ are respectively connected to the 1 st to n-th virtual routers 14₁ to 14ₙ through global networks 17₁ to 17ₙ. In the system 10 illustrated in Fig. 1, one of private networks 18₁ to 18ₙ extends respectively from the 1st to n-th virtual firewalls 15₁ to 15ₙ, and the 1st to n-th virtual firewalls 15₁ to 15ₙ and the virtual machines 16₁ to 16ₙ are respectively connected to each other through the private networks 18₁ to 18ₙ. In the system 10, a plurality of virtual machines (including clones) are connected to one virtual firewall, thereby forming a machine group (including a clone group).

Each user can use the virtual machines 16₁ to 16ₙ provided by this system 10 through user servers 19₁ to 19ₙ held by the user. Users can log in this system 10 from the Internet 20 by using the user servers 19₁ to 19ₙ and set the virtual machines 16₁ to 16ₙ used by the users. The users can provide various services through the Internet 20 and receive various services through the Internet 20 by using the virtual machines 16₁ to 16ₙ.

The physical firewall 12, the physical server 13, and the user servers 19₁ to 19ₙ are computers each being equipped with a central processing unit (CPU or MPU) and a storage device (memory), and large-capacity hard disks are built therein. The input device and the display 23 are mounted on the user servers 19₁ to 19ₙ. Each one of the physical server 13 and the user servers 19₁ to 19ₙ has various server functions such as a DNS server function for setting correspondence between a host name and an IP address assigned to the host name, a web server function that is necessary for publishing a home page, a database server function for receiving a request from another computer or another server and reading or writing various kinds of information, a mail server function for transmitting and receiving electronic mails, and a document server function for storing data of all the generated sentences and images and configuring such data to be searchable.

The physical server 13 and the user servers 19₁ to 19ₙ are connectable to the Internet 20 and can access and log in the other servers (computers) of an unspecified large number by using the Internet 20. The physical server 13 and the user servers 19₁ to 19ₙ can provide various kinds of information (various services) through the Internet 20 and can receive various kinds of information (various services) through the Internet 20.

Each one of the virtual machines 16₁ to 16ₙ, similar to the physical server 13, is a computer equipped with a central processing unit (CPU or MPU), a storage device (memory), and a hard disk and has various server functions such as the DNS server function, the Web server function, the database server function, the mail server function, and the document server function. The virtual machines 16₁ to 16ₙ are logical computers that are operated by independent operating systems (OS). The virtual machines 16₁ to 16ₙare connectable to the Internet 20 and can access and log in the other servers (computers) of an unspecified large number by using the Internet 20. Each one of the virtual machines 16₁ to 16ₙ can provide various kinds of information (various services) through the Internet 20 and can receive various kinds of information (various services) through the Internet 20.

In this system 10, one or some of the virtual machines 16₁ to 16ₙ are used as a management machine 21 (management virtual machine). An input device (not illustrated in the figure) such as a keyboard or a mouse and an output device such as a display 22 or a printer (not illustrated in the figure) are connected to the management machine 21 through an interface. Alternatively, instead of using the virtual machines 16₁ to 16ₙ as the management machine 21, it may be configured such that a physical management server (management computer) that is physically present is connected to the physical firewall 12 through an interface, and the physical management server is used as the management machine 21. In accordance with the supervisor of this system 10, the management machine 21 monitors various means performed by the system 10 and monitors the virtual machines 16₁ to 16ₙ provided for each user.

In the hard disks of the virtual machines 16₁ to 16ₙ and the user servers 19₁ to 19ₙ, user data such as a login ID, a password, a user number corresponding to the login ID and the password, a user name (a corporate name (including the name of its representative) or a personal name), a section or a department, a managerial position, an address (a corporate address, a personal address), a telephone number, a FAX number, and a mail address) is stored. In the management machine 21, management company data such as a login ID, a password, a management company number corresponding to the login ID and the password, a management corporate name (including the name of its representative), a corporate address, a telephone number, a FAX number, and a mail address is stored.

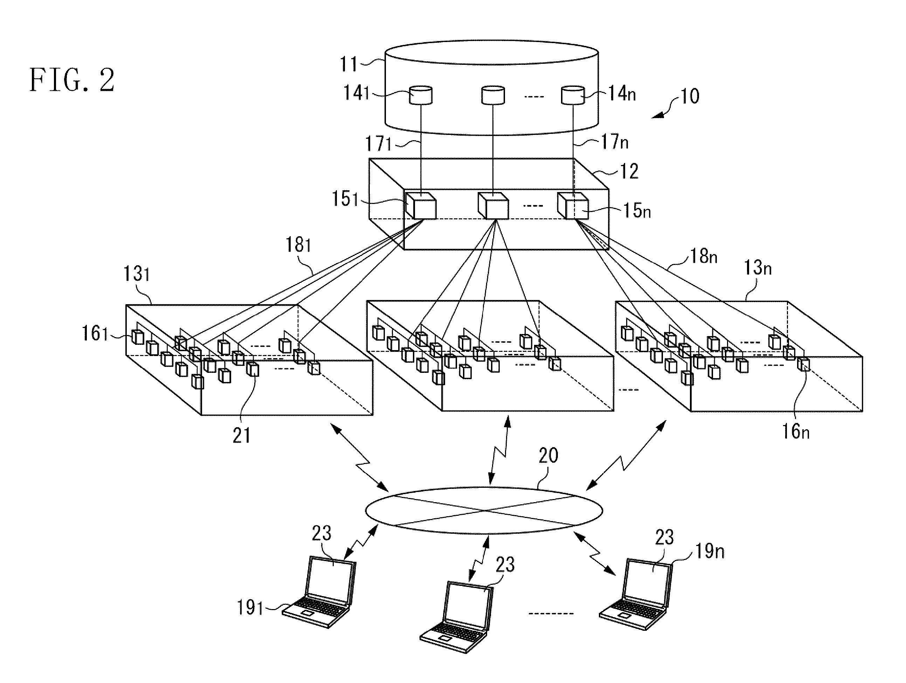

Fig. 2 is a conceptual diagram that illustrates the configuration of the system 10 for providing virtual machines as another example. Fig. 2 illustrates a case where a management company additionally installs physical servers 13 to the data center. In the system 10 providing virtual machines illustrated in Fig. 2, the physical hardware is configured by one physical security router 11, one physical firewall 12, and a plurality of physical servers 13₁ to 13ₙ. In the system 10 illustrated in Fig. 2, the plurality of physical servers 13₁ to 13ₙ are connected to one physical firewall 12. The virtualized hardware is configured by 1st to n-th virtual routers 14₁ to 14ₙ virtualized on one physical security router 11, 1 st to n-th virtual firewalls 15₁ to 15ₙ virtualized on one physical firewall 12, and a plurality of virtual machines 16₁ to 16ₙvirtualized on the plurality of physical servers 13₁ to 13ₙ.

The physical security router 11 and the physical firewall 12 are connected to each other through a global network. The physical firewall 12 and the physical servers 13₁ to 13ₙ are connected to each other through a private network. In the system 10 illustrated in Fig. 2, the 1st to n-th virtual firewalls 15₁ to 15ₙ virtualized on the physical firewall 12 are connected respectively to the 1st to n-th virtual routers 14₁ to 14ₙ virtualized on the physical security router 11 through the global networks 17₁ to 17ₙ. In the system 10 illustrated in Fig. 2, a plurality of (two or more) private networks 18₁ to 18ₙ extend from the physical servers 15₁ to 15ₙ of the 1st to n-th virtual firewalls, and the 1st to n-th virtual firewalls 15₁ to 15ₙ and the virtual machines 16₁ to 16ₙ are respectively connected to each other through the private networks 18₁ to 18ₙ. In the system 10, a plurality of virtual machines (including clones) are connected to one virtual firewall, thereby forming a machine group (including a clone group). The physical security router 11, the physical firewall 12, the physical servers 13₁ to 13ₙ, the virtual machines 16₁ to 16ₙ, and the user servers 19₁ to 19ₙ are the same as those of the system 10 illustrated in Fig. 1.

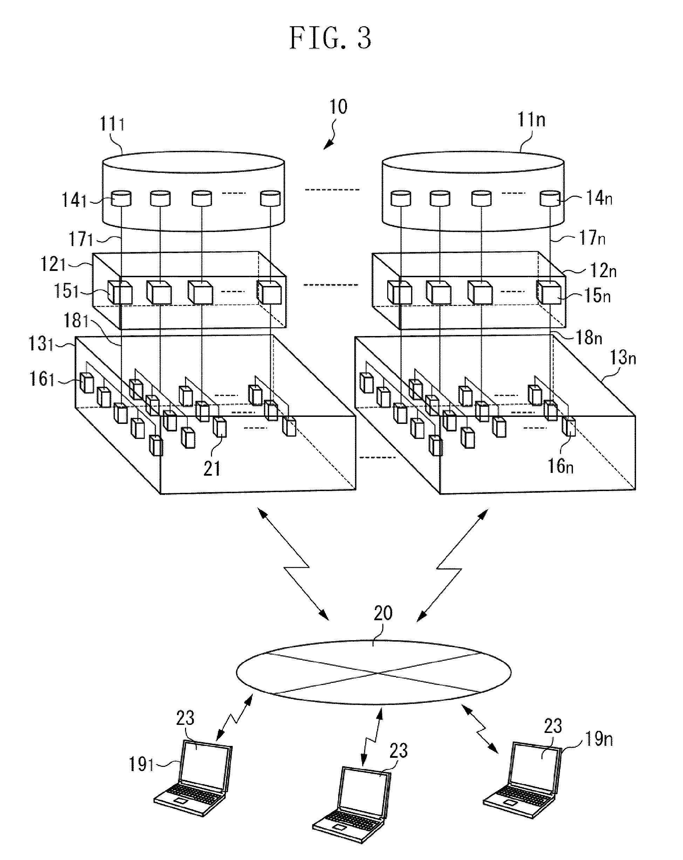

Fig. 3 is a conceptual diagram that illustrates the configuration of a system 10 for providing virtual machines as another example. Fig. 3 illustrates a case where a management company additionally installs physical security routers 11, physical firewalls 12, and physical servers 13 to the data center. In the system 10 for providing virtual machines illustrated in Fig. 3, the hardware that is physically present is configured by a plurality of physical security routers 11₁ to 11ₙ, a plurality of physical firewalls 12₁ to 12ₙ respectively corresponding to the security routers 11₁ to 11ₙ, and a plurality of physical servers 13₁ to 13ₙ respectively corresponding to the physical firewalls 12₁ to 12ₙ. In the system 10 illustrated in Fig. 3, one of the physical servers 13₁ to 13ₙ is connected to each one of the physical firewalls 12₁ to 12ₙ. The virtualized hardware is configured by 1st to n-th virtual routers 14₁ to 14ₙ virtualized respectively on the physical security routers 11₁ to 11ₙ, 1st to n-th virtual firewalls 15₁ to 15ₙ virtualized respectively on the physical firewalls 12₁ to 12ₙ, and a plurality of virtual machines 16₁ to 16ₙvirtualized respectively on the physical servers 13₁ to 13ₙ.

The physical security routers 11₁ to 11ₙ and the physical firewalls 12₁ to 12ₙ are respectively connected to each other through a global network. The physical firewalls 12₁ to 12ₙ and the physical servers 13₁ to 13ₙ are respectively connected to each other through a private network. In the system 10 illustrated in Fig. 3, the 1st to n-th virtual firewalls 15₁ to 15ₙ virtualized respectively on the physical firewalls 12₁ to 12ₙ are connected respectively to the 1st to n-th virtual routers 14₁ to 14ₙ virtualized respectively on the physical security routers 11₁ to 11ₙ through the global networks 17₁ to 17ₙ. In the system 10 illustrated in Fig. 3, one of private networks 18₁ to 18ₙ extends respectively from the 1st to n-th virtual firewalls 15₁ to 15ₙ, and the 1st to n-th virtual firewalls 15₁ to 15ₙ and the virtual machines 16₁ to 16ₙ are respectively connected to each other through the private networks 18₁ to 18ₙ. In the system 10, a plurality of virtual machines (including clones) are connected to each one virtual firewall, thereby forming a machine group (including a clone group). The physical security routers 11₁ to 11ₙ, the physical firewalls 12₁ to 12ₙ, the physical servers 13₁ to 13ₙ, the virtual machines 16₁ to 16ₙ, and the user servers 19₁ to 19ₙ are the same as those of the system 10 illustrated in Fig. 1.

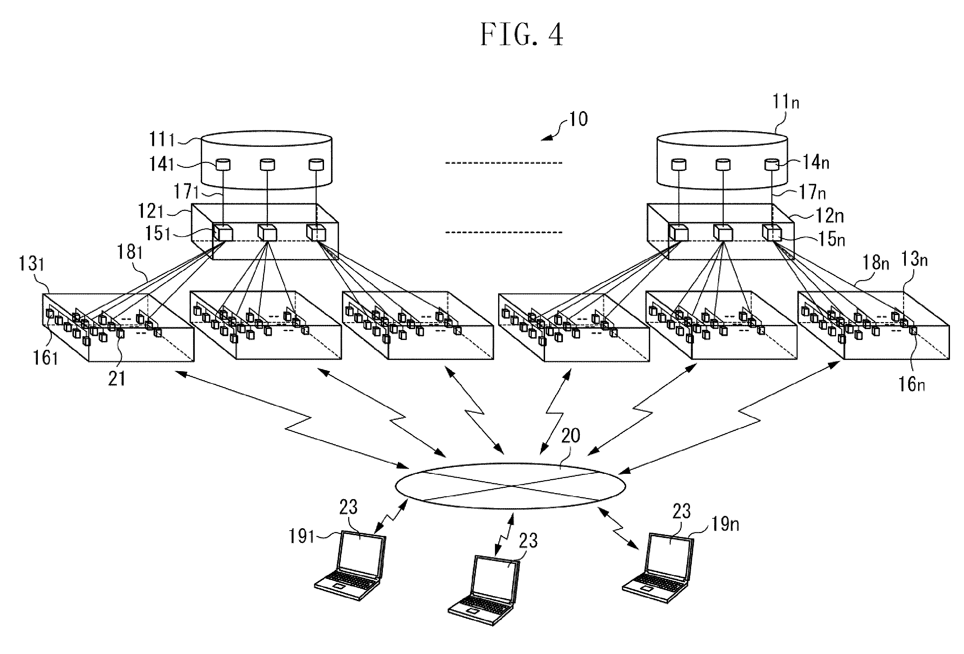

Fig. 4 is a conceptual diagram that illustrates the configuration of a system 10 for providing virtual machines as another example. Fig. 4 illustrates a case where a management company additionally installs physical security routers 11, physical firewalls 12, and physical servers 13 to the data center. In the system 10 for providing virtual machines illustrated in Fig. 4, the hardware that is physically present is configured by a plurality of physical security routers 11₁ to 11ₙ, a plurality of physical firewalls 12₁ to 12ₙ respectively corresponding to the security routers 11₁ to 11ₙ, and a plurality of physical servers 13₁ to 13ₙ respectively corresponding to the physical firewalls 12₁ to 12ₙ. In the system 10 illustrated in Fig. 4, the plurality of physical servers 13₁ to 13ₙ are connected to each one of the physical firewalls 12₁ to 12ₙ. The virtualized hardware is configured by 1st to n-th virtual routers 14₁ to 14ₙ virtualized respectively on the physical security routers 11₁ to 11ₙ, 1st to n-th virtual firewalls 15₁ to 15ₙ virtualized respectively on the physical firewalls 12₁ to 12ₙ, and a plurality of virtual machines 16₁ to 16ₙ virtualized on the physical servers 13₁ to 13ₙ.

The physical security routers 11₁ to 11ₙ and the physical firewalls 12₁ to 12ₙ are respectively connected to each other through a global network. The physical firewalls 12₁ to 12ₙ and the physical servers 13₁ to 13ₙ are respectively connected to each other through a private network. In the system 10 illustrated in Fig. 4, the 1st to n-th virtual firewalls 15₁ to 15ₙ virtualized on each one of the physical firewalls 12₁ to 12ₙ are connected respectively to the 1st to n-th virtual routers 14₁ to 14ₙ virtualized respectively on the physical security routers 11₁ to 11ₙ through the global networks 17₁ to 17ₙ. In the system 10 illustrated in Fig. 4, a plurality of (two or more) private networks 18₁ to 18ₙ extend respectively from the 1st to n-th virtual firewalls 12₁ to 12ₙ, and the 1st to n-th virtual firewalls 15₁ to 15ₙ and the virtual machines 16₁ to 16ₙ are respectively connected to each other through the private networks 18₁ to 18ₙ. In the system 10, a plurality of virtual machines (including clones) are connected to each one virtual firewall, thereby forming a machine group (including a clone group). The physical security routers 11₁ to 11ₙ, the physical firewalls 12₁ to 12ₙ, the physical servers 13₁ to 13ₙ, the virtual machines 16₁ to 16ₙ, and the user servers 19₁ to 19ₙ are the same as those of the system 10 illustrated in Fig. 1.

The system 10 (management server 21) for providing virtual machines operates an application that is stored in the memory under the control of the operating system (OS), thereby performing means described below in accordance with the application. In accordance with a user's request, the system 10 executes a virtual machine generating means that generates virtual machines 16₁ to 16ₙ on the physical servers 13, 13₁ to 13ₙ, executes a capacity setting means that sets the capacities of the generated virtual machines 16₁ to 16ₙ for the virtual machines 16₁ to 16ₙ, and executes a first virtual machine assigning means that assigns the generated virtual machines 16₁ to 16ₙ to the users. The system 10 executes a first IP address setting means that generates predetermined IP addresses for the virtual machines 16₁ to 16ₙ assigned by the first virtual machine assigning means and sets the generated IP addresses to the virtual machines 16₁ to 16ₙ.The first virtual machine assigning means assigns the virtual machines 16₁ to 16ₙ belonging to a machine group having a highest processing efficiency out of machine groups connected to the 1st to n-th virtual firewalls 15₁ to 15ₙ to the users.

The system 10 for providing virtual machines executes a first capacity visualizing means that allows the capacities of the virtual machines 16₁ to 16ₙ assigned by the first virtual machine assigning means to be individually visualized for respective users and allows the capacities to be non-visible to the other user. For the management company (data center), the capacities of the virtual machines 16₁ to 16ₙ of all the users are displayed. The system 10 executes a first virtual machine removing means that removes unnecessary virtual machines 16₁ to 16ₙ out of virtual machines 16₁ to 16ₙ, which are assigned by the first virtual machine assigning means, in accordance with a user's request.

The system 10 for providing virtual machines executes a clone generating means that generates clones of the same virtual machines 16₁ to 16ₙ as the virtual machines 16₁ to 16ₙ that have already been generated in accordance with a request of the user and executes a second virtual machine assigning means that assigns the generated clones of the virtual machines 16₁ to 16ₙ to the users. The system 10 executes a second IP address setting means that generates predetermined IP addresses for the clones of the virtual machines 16₁ to 16ₙ assigned by the second virtual machine assigning means and individually sets the generated IP addresses to the clones of the virtual machines 16₁ to 16ₙ. The clones of the virtual machines 16₁ to 16ₙ are copies of the virtual machines 16₁ to 16ₙ that are completely the same as the virtual machines 16₁ to 16ₙ that have already been virtualized.

The second virtual machine assigning means assigns clones belong to the clone group having a highest processing efficiency from among the clone group connected to the 1st to n-th virtual firewalls 15₁ to 15ₙ to the users.

The system 10 for providing virtual machines executes a second capacity visualizing means that allows the capacities of the clones of the virtual machines 16₁ to 16ₙ assigned by the second virtual machine assigning means to be individually visualized to respective users and allows the capacities to be non-visible to the other users. For the management company (data center), the capacities of the clones of the virtual machine 16₁ to 16ₙ of all the users are displayed. The system 10 executes a second virtual machine removing means that removes the clones of unnecessary virtual machines 16₁ to 16ₙ out of the clones of the virtual machines 16₁ to 16ₙ assigned by the second virtual machine assigning means in accordance with a user's request.

As the capacities of the virtual machines 16₁ to 16ₙ (including the clones of the virtual machines 16₁ to 16ₙ), there are the number of central processing units (CPUs or MPUs) used in each one of the virtual machines 16₁ to 16ₙ, the memory size of each one of the virtual machines 16₁ to 16ₙ, the number of hard disks used in each one of the virtual machines 16₁ to 16ₙ, the hard disk capacity of each one of the virtual machines 16₁ to 16ₙ, and the used operating system (OS). To allow the capacities to be individually visualized for each user and allow the capacities to be non-visible to the other users by the first capacity visualizing means and the second capacity visualizing means represents that the capacities of the virtual machines 16₁ to 16ₙ and the clones provided for a specific user are allowed to be seen and acquired by the user, and the other users are not allowed to see or acquire the capacities of the virtual machines 16₁ to 16ₙ and the clones.

The system 10 for providing virtual machines executes a global network setting means that sets the global networks 17₁ to 17ₙ connecting the virtual routers 14₁ to 14ₙ and the virtual firewalls 15₁ to 15ₙ in accordance with a user's request and executes a private network setting means that sets the private networks 18₁ to 18ₙ connecting the virtual firewalls 15₁ to 15ₙ and the virtual machines 16₁ to 16ₙ in accordance with a user's request. In addition, the private network setting means divides the virtual machines 16₁ to 16ₙ connected to specific virtual firewalls 15₁ to 15ₙ in accordance with a user's request into two or more groups and sets a plurality of the private networks 18₁ to 18ₙ connecting the virtual firewall 15₁ to 15ₙ and the groups. The system 10 executes a network visualizing means that allows the networks 17₁ to 17ₙ and 18₁ to 18ₙ of the virtual machines 16₁ to 16ₙ (including the clones of the virtual machines 16₁ to 16ₙ) set by each network setting means to be individually visualized to each user and allows the networks to be non-visible to the other users. For the management company (data center), the networks 17₁ to 17ₙ and 18₁ to 18ₙ of the virtual machines 16₁ to 16ₙ of all the users are displayed.

The system 10 for providing virtual machines executes a global network changing means that adds, changes, or removes the global networks 17₁ to 17ₙ connecting the virtual routers 14₁ to 14ₙ and the virtual firewalls 15₁ to 15ₙ in accordance with a user's request subsequently (after the initial setting of the global networks 17₁ to 17n) and executes a private network changing means that adds, changes, or removes the private networks 18₁ to 18ₙ connecting the virtual firewalls 15₁ to 15ₙ and the virtual machines 16₁ to 16ₙ in accordance with a user's request subsequently (after the initial setting of the private networks 18₁ to 18ₙ). The system 10 executes a network change visualizing means that allows the networks 17₁ to 17ₙ and 18₁ to 18ₙ of the virtual machines 16₁ to 16ₙ (including the clones of the virtual machines 16₁ to 16ₙ) changed by each network changing means to be individually visualized to each user and allows the networks to be non-visible to the other users. For the management company (data center), the networks 17₁ to 17ₙ and 18₁ to 18ₙ in which the virtual machines 16₁ to 16ₙ of all the users changed are displayed. The system 10 executes a console function setting means that sets a console function to the virtual machines 16₁ to 16ₙ in accordance with a user's request.

The system 10 for providing virtual machines executes a capacity changing means that changes the capacities of the virtual machines 16₁ to 16ₙ (including the clones of the virtual machines 16₁ to 16ₙ) subsequently (after the initial setting of the capacities) in accordance with a user's request and executes a capacity change visualizing means that allows the capacities of the virtual machines 16₁ to 16ₙ (including the clones of the virtual machines 16₁ to 16ₙ) that have been changed by the capacity changing means to be individually visualized for each user and allows the capacities to be non-visible to the other users. For the management company (data center), the capacities of the virtual machines 16₁ to 16ₙ (including the clones of the virtual machines 16₁ to 16ₙ), which have been changed, of all the users are displayed.

To allow the changed capacities to be individually visualized for each user and allow the capacities to be non-visible to the other users by the capacity change visualizing means represents that the changed capacities of the virtual machines 16₁ to 16ₙ and the clones provided for a specific user are allowed to be seen and acquired by the user, and the other users are not allowed to see or acquire the changed capacities of the virtual machines 16₁ to 16ₙ and the clones.

In the changing of the capacities of the virtual machines 16₁ to 16ₙ and the clones, there are a case where the number of the central processing units of the virtual machines 16₁ to 16ₙ or the clones is subsequently increased or decreased in accordance with a user's request, a case where the memory size of the virtual machines 16₁ to 16ₙ or the clones is subsequently increased or decreased in accordance with a user's request, a case where the number of hard disks of the virtual machines 16₁ to 16ₙ or the clones is subsequently increased or decreased in accordance with a user's request, a case where the capacity of hard disks of the virtual machines 16₁ to 16ₙ or the clones is subsequently increased or decreased in accordance with a user's request, and a case where the used operating system is changed. The capacity change visualizing means allows the number of the central processing units that has been increased or decreased by the capacity changing means to be individually visualized for respective users and to be non-visible to the other users. In addition, the capacity change visualizing means allows the memory size that has been increased or decreased by the capacity changing means to be individually visualized for respective users and to be non-visible to the other users. Furthermore, the capacity change visualizing means allows the number of hard disks that has been increased or decreased by the capacity changing means to be individually visualized for respective users and to be non-visible to the other users and allows the hard disk capacity that has been increased or decreased by the capacity changing means to be individually visualized for respective users and to be non-visible to the other users. In addition, the capacity change visualizing means allows the operating system that has been changed by the capacity changing means to be individually visualized for respective users and to be non-visible to the other users.

The system 10 for providing virtual machines executes an operating status visualizing means that allows the operating statuses of the virtual machines 16₁ to 16ₙ and the clones assigned to users to be individually visualized for respective users and to be non-visible to the other users. In addition, for the management company (data center), the operating statuses of the virtual machines 16₁ to 16ₙ and the clones of all the users are displayed. To allow the operating statuses of the virtual machines 16₁ to 16ₙ and the clones to be individually visualized for respective users and to be non-visible to the other users by the operating status visualizing means represents that the operating statuses of the virtual machines 16₁ to 16ₙ and the clones that are provided for a specific user are allowed to be seen and acquired by the user, and the operating statuses of the virtual machines 16₁ to 16ₙ and the clones are not allowed to be seen and acquired by the other users.

As the operating statuses of the virtual machines 16₁ to 16ₙ and the clones, there are past or present memory use rates of the virtual machines 16₁ to 16ₙ and the clones, and the operating status visualizing means allows the memory use rates to be individually visualized for respective users and to be non-visualized to the other users. In addition, the operating status visualizing means visualizes the memory use rates in time series. As the operating statuses of the virtual machines 16₁ to 16ₙ and the clones, there are the past or present use rates of the central processing units (CPUs or MPUs) of the virtual machines 16₁ to 16ₙ and the clones, and the operating status visualizing means allows the use rates of the central processing units to be individually visualized for respect users and to be non-visible to the other users. In addition, the operating status visualizing means visualizes the use rates of the central processing units in time series.

As the operating statuses of the virtual machines 16₁ to 16ₙ and the clones, there are past or present private network use rates of the virtual machines 16₁ to 16ₙ and the clones, and the operating status visualizing means allows the private network use rates to be individually visualized for respective users and to be non-visualized to the other users. In addition, the operating status visualizing means visualizes the private network use rates in time series. As the operating statuses of the virtual machines 16₁ to 16ₙ and the clones, there are operating times of each one of the virtual machines 16₁ to 16ₙ and the clones, the latest power-on date and time of each one of the virtual machines 16₁ to 16ₙ and the clones, and the latest power-off date and time of each one of the virtual machines 16₁ to 16ₙ and the clones, and the operating status visualizing means allows the operating time, the power-on date and time, and the power-off date and time to be individually visualized for each user and to be non-visible to the other users.

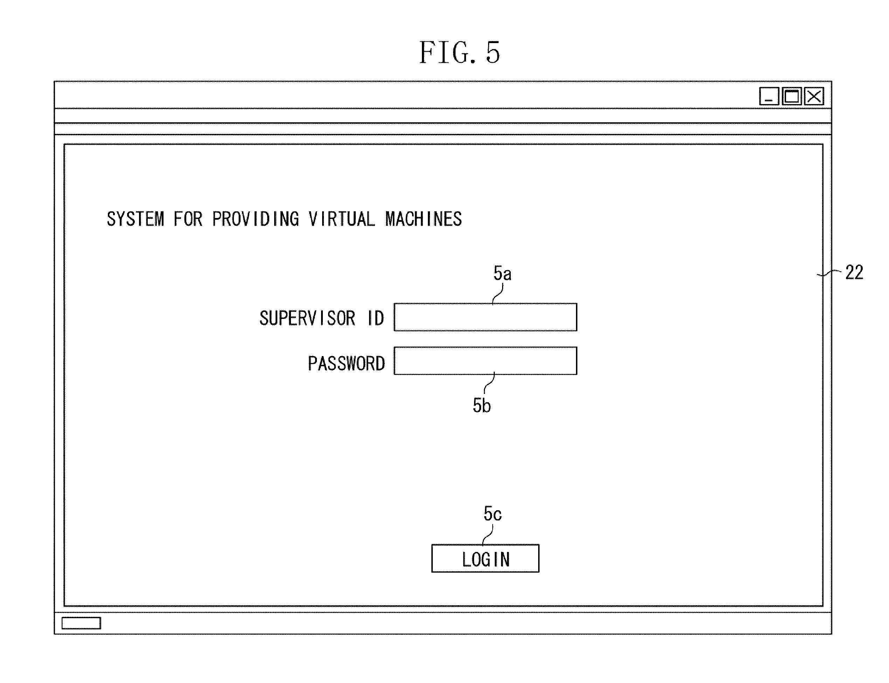

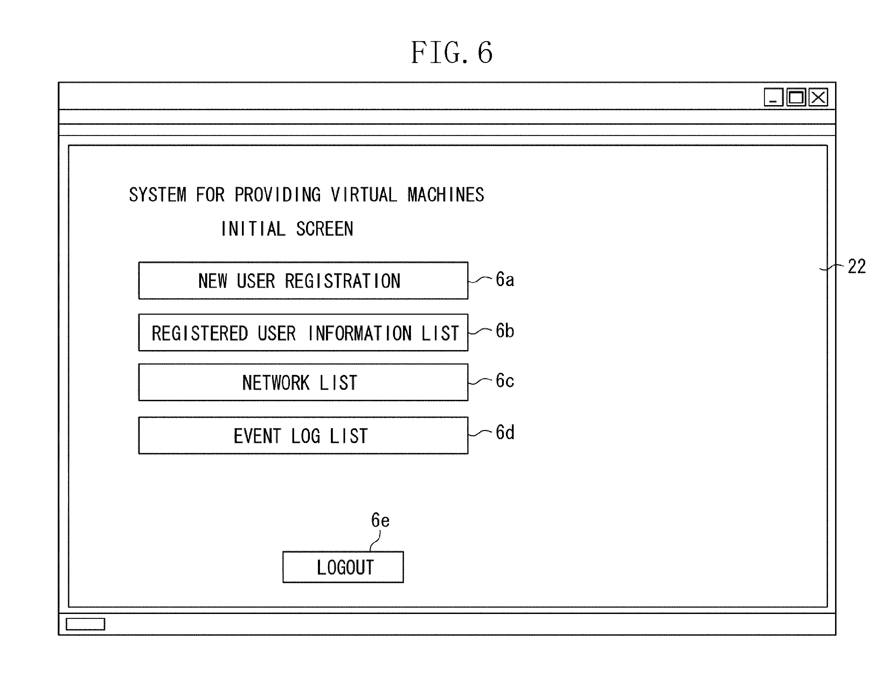

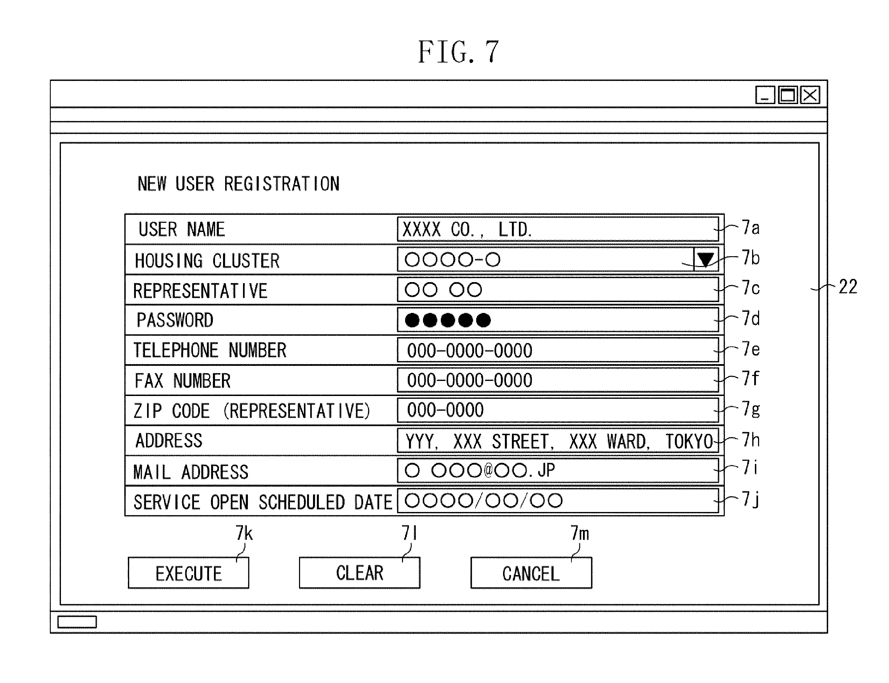

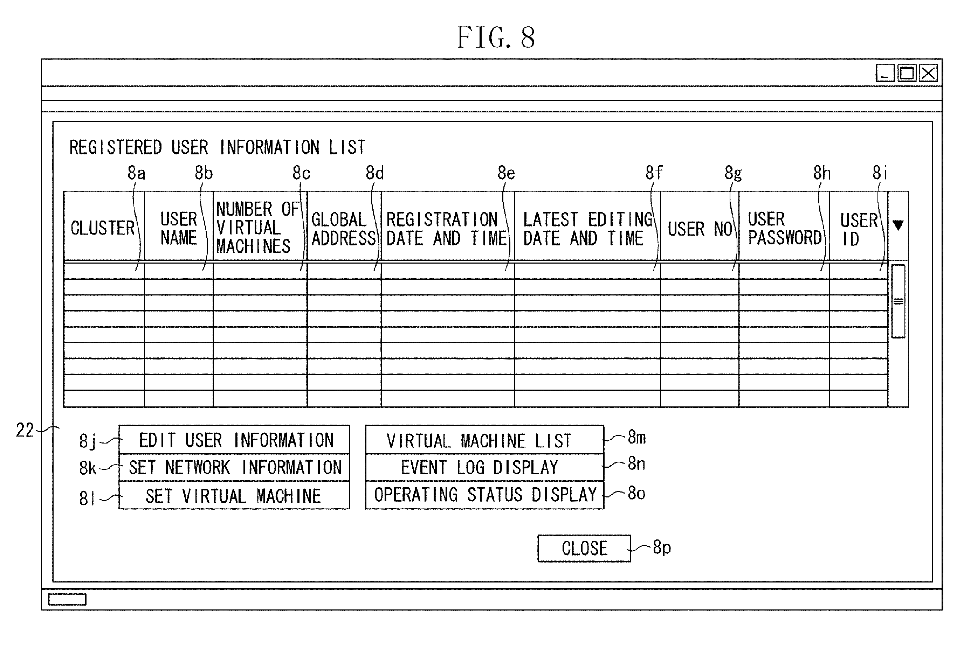

Fig. 5 is a diagram that illustrates an example of a login screen displayed on the display 22 of the management machine 21, Fig. 6 is a diagram that illustrates an example of the initial screen displayed on the display 22 of the management machine 21. Fig. 7 is a diagram that illustrates an example of a new user registration screen displayed on the display 22 of the management machine 21, and Fig. 8 is a diagram that illustrates an example of a registered user information list screen displayed on the display 22 of the management machine 21. In these figures and diagrams represented below, each input area and data displayed in each input area are not illustrated.

In a case where a user desires to use the virtual machines 16₁ to 16ₙ provided by this system 10, first, the user contacts the data center of a management company that manages the system 10. The user notifies a person in charge of user information such as the user name, the representative name, the telephone number, the FAX number, the zip code, the address, and the mail address. The person in charge of the contacted data center inquires the user of the number of global networks 17₁ to 17ₙ and the number of private networks 18₁ to 18ₙ desired to be used and performs new user registration for the management machine 21.

When the system 10 is operated by clicking on the icon of the system 10 for providing virtual machines that is displayed on the display of the management server 21, the login screen illustrated in Fig. 5 is displayed on the display 22 of the management machine 21. On the login screen illustrated in Fig. 5, a supervisor ID input area 5a, a password input area 5b, and a login button 5c are displayed. After inputting the supervisor ID to the supervisor ID input area 5a and inputting a password to the password input area 5b, the management company (the person in charge) clicks on the login button 5c.

When the login button 5c is clicked on, an initial screen represented in Fig. 6 is displayed on the display 22 of the management machine 21. On the initial screen illustrated in Fig. 6, a new user registration button 6a, a registered user information list button 6b, a network list button 6c, an event list button 6d, and a logout button 6e are displayed. The management company (a person in charge) registers a new user by clicking on the new user registration button 6a. When the new user registration button 6a is clicked, the management machine 21 displays a new user registration screen illustrated in Fig. 7 on the display 22.

On the new user registration screen illustrated in Fig. 7, a user name input area 7a, a housing cluster display area 7b, a representative input area 7c, a password input area 7d, a telephone number input area 7e, a FAX number input area 7f, a zip code input area 7g, an address input area 7h, a mail address input area 7i, and a scheduled service opening date display area 7j are displayed, and an execution button 7k, a clear button 71, and a cancel button 7m are displayed. In the housing cluster display area 7b, a housing cluster (a cluster having a least number of virtual machines) that is automatically set is displayed. In the scheduled service opening date display area 7j, the virtual machine usable date of a user who has performed user registration is displayed.

When the management company (the person in charge) inputs data (information) that is necessary to each input area of the new user registration screen illustrated in Fig. 7 and clicks on the execution button 7k, the management machine 21 generates a user identifier that specifies the user, generates a user No. and a user ID, and stores the user identifier, data input to each input area, and data (including registration date and time or latest editing date and time, a user No., and a user ID) displayed in each display area in a hard disk in the state being associated with one another. When the user identifier and the above-described data are stored, the management machine 21 transmits a mail in which the user password and the user ID used by the user are represented to the user servers 19₁ to 19ₙ of the user and displays the initial screen illustrated in Fig. 6 on the display 22 again. When the clear button 71 is clicked, the data that has been input to each input area is eliminated, and the inputting of data is performed again from the start. When the cancel button 7m is clicked, the screen is returned to the initial screen illustrated in Fig. 6. The management company registers a plurality of users in this system 10 through the new user registration process.

Next, the management company clicks on the registered user information list button 6b on the initial screen illustrated in Fig. 6. When the registered user information list button 6b is clicked, the management machine 21 displays a registered user information list screen illustrated in Fig. 8 on the display 22. On the registered user information list screen illustrated in Fig. 8, a cluster display area 8a in which a housing cluster is displayed, a user name display area 8b in which a user name is displayed, a virtual machine number display area 8c in which the number of virtual machines is displayed, a global address display area 8d in which a global network address is displayed, a registered date and time display area 8e in which registration date and time is displayed, a latest editing date and time display area 8f in which latest editing date and time is displayed, a user number display area 8g in which a user No. is displayed, a user password display area 8h in which a user's password is displayed, and a user ID display area 8i in which a user's ID is displayed are displayed. In addition, a user information editing button 8j, a network information setting button 8k, a virtual machine setting button 81, a virtual machine list button 8m, an event log list button 8n, an operating status display button 8o, and a close button 8p are displayed. When the close button 8p is clicked, the screen is returned to the initial screen illustrated in Fig. 6.

In a case where the registered user information is added, changed, or removed (altered), the management company inverts a user name that is a target for changing the user information out of the user names displayed in the user name display area 8b of the registered user information list screen illustrated in Fig. 8 and then clicks on the user information editing button 8j. When the user information editing button 8j is clicked, although not illustrated in the figure, the management machine 21 displays a user information editing screen on the display 22. The user information editing screen is the same as the new user registration screen illustrated in Fig. 7 and is in a state in which data of the registered user is displayed in each display area. In a case where the user information is to be altered, the management company alters the data displayed in each area and then clicks on the execution button. The management machine 21 stores the user identifier and the data (including the latest editing date and time and the user No.) displayed in each display area in the hard disk in the state being associated with each other. When the user identifier and the data are stored, the management machine 21 displays the registered user information list screen illustrated in Fig. 8 on the display 22 again.

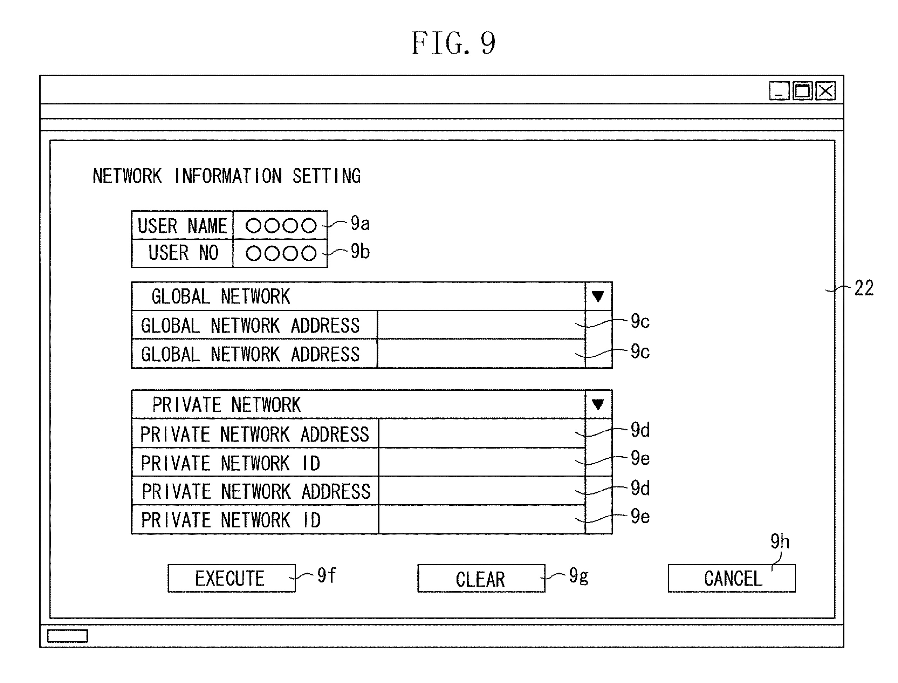

Fig. 9 is a diagram that illustrates an example of a network information setting screen displayed on the display 22 of the management machine 21. In a case where network information of the registered user is to be set, the management company inverts the user name of which the network information is set out of user names displayed in the user name display area 8b of the registered user information list screen illustrated in Fig. 8 and then clicks on the network information setting button 8k. When the network information setting button 8k is clicked, the management machine 21 displays the network information setting screen illustrated in Fig. 9 on the display 22.

On the network information setting screen illustrated in Fig. 9, a user name display area 9a in which a user name is displayed, a user number display area 9b in which a user No. is displayed, a global network input area, and a private network input area are displayed, and an execution button 9f, a clear button 9g, and a cancel button 9h are displayed. The management company checks the user name and the user No. displayed respectively in the user name display area 9a and the user number display area 9b and then sets global networks 17₁ to 17ₙ of which the number is desired by the user. More specifically, a global network address is input (a global network address is selected from a pull-down list of the global network address input area 9c) to the global network address input area 9c included in the global network input area.

In addition, private networks 18₁ to 18ₙ of which the number is desired by the user are set. More specifically, a private network address is input (a private network address is selected from a pull-down list of a private network input area 9d) to the private network address input area 9d included in the private network input area, and a private network ID is input (a private network ID is selected from a pull-down list of a private network input area 9e) to the private network ID input area 9e included in the private network input area.

When the execution button 9f is clicked after the address and the ID are input to the respective input areas, the management machine 21, although not illustrated in the figure, displays a network setting checking screen on the display 22. On the network setting checking screen, a user name that is a target for setting the network, a global network display area in which the global networks 17₁ to 17ₙ are displayed, a private network display area in which the private networks 18₁ to 18ₙ are displayed, a setting confirmation button, and a cancel button are displayed. When the cancel button is clicked, the screen is returned to the registered user information list screen illustrated in Fig. 8. When the setting confirmation button is clicked, the management machine 21 stores the user identifier and the global network address in the hard disk in the state being associated with each other (global network setting means) and stores the user identifier, the private network address, and the private network ID in the hard disk in the state being associated with one another (private network setting means). When those are stored, the management machine 21 displays the registered user information list screen illustrated in Fig. 8 on the display 22 again. When the clear button 9g is clicked on the network information setting screen illustrated in Fig. 9, data input to each input area is eliminated, and the inputting of data is performed again from the start. When the cancel button 9h is clicked, the screen is returned to the registered user information list screen illustrated in Fig. 8.

The system 10, as illustrated in Figs. 1 to 4, can enable the user to use a plurality of virtual routers 14₁ to 14ₙ and virtual firewalls 15₁ to 15ₙ connected through the global networks 17₁ to 17ₙ in accordance with a user's request. In addition, in this system 10, as illustrated in Figs. 2 to 4, a plurality of networks 18₁ to 18ₙ of which the number is desired by the user extend from each one of virtual firewalls 15₁ to 15ₙ, virtual machines 16₁ to 16ₙ are connected to the private networks 18₁ to 18ₙ, and the user can be enabled to use the virtual machines 16₁ to 16ₙ connected to the private networks 18₁ to 18ₙ.

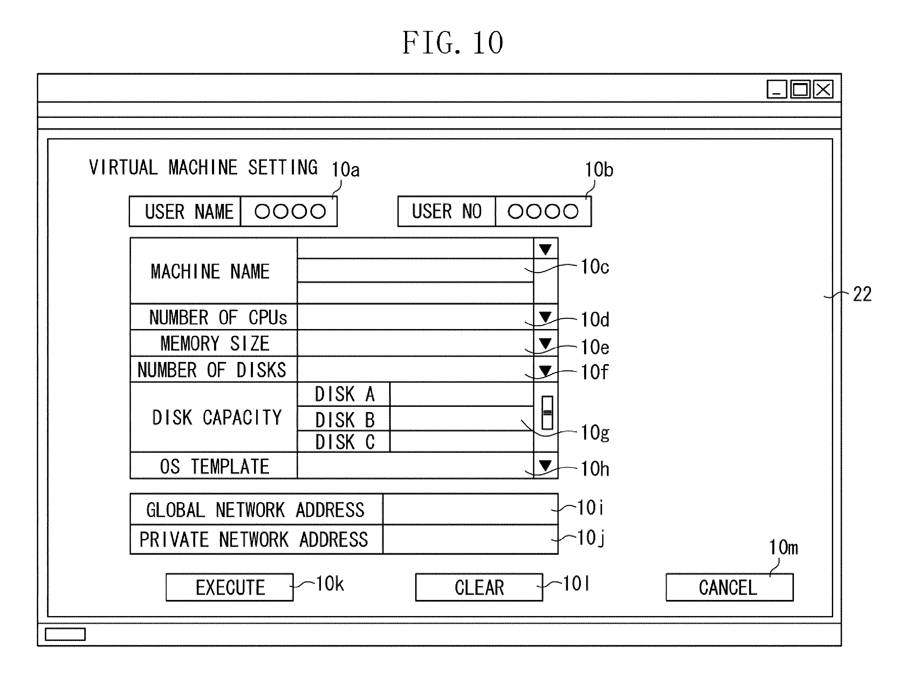

Fig. 10 is a diagram that illustrates an example of a virtual machine setting screen displayed on the display 22 of the management machine 21. In a case where the virtual machines 16₁ to 16ₙ to be used by the user are set, the management company inverts a user name setting the virtual machines 16₁ to 16ₙ out of user names displayed in the user name display area 8b of the registered user information list screen illustrated in Fig. 8 and then clicks on the virtual machine setting button 8l. When the virtual machine setting button 8l is clicked, the management machine 21 displays the virtual machine setting screen illustrated in Fig. 10 on the display 22. In addition, the management company receives the number of virtual machines 16₁ to 16ₙ and the capacities (performance) of the virtual machines 16₁ to 16ₙ, which are desired, from the user in advance.

On the virtual machine setting screen illustrated in Fig. 10, a user name display area 10a in which a user name is displayed, a user number display area 10b in which a user No. is displayed, a machine name input area 10c, a CPU number (the number of central processing units) input area 10d, a memory size input area 10e, a disk number input area 10f, a disk capacity input area 10g of each disk, an OS template input area 10h, a global network address display area 10i in which a global network address is displayed, and a private network address display area 10j in which a private network address is displayed are displayed, and an execution button 10k, a clear button 101, and a cancel button 10m are displayed.

The management company checks the user name and the user No. that are displayed respectively in the user name display area 10a and the user number display area 10b and then sets virtual machines 16₁ to 16ₙ of which the number is desired by the user. More specifically, the management company inputs one, two, or more virtual machines to the machine name input area 10c (selects a virtual machine name from a pull-down list of the machine name input area 10c), inputs the numbers of CPUs of the virtual machines 16₁ to 16ₙ to the CPU number input area 10d (selects the numbers of CPUs from a pull-down list of the CPU number input area 10d), and inputs the memory sizes of the virtual machines 16₁ to 16ₙ to the memory size input area 10e (selects memory sizes from a pull-down list of the memory size input area 10e). In addition, the management company inputs the number of disks of the virtual machines 16₁ to 16ₙ to the disk number input area 10f (selects the number of disks from a pull-down list of the disk number input area 10f), inputs disk capacities of the virtual machines 16₁ to 16ₙ to the disk capacity input area 10g (selects a disk capacity from a pull-down list of the disk capacity input area 10g), and inputs OS templates used in the virtual machines 16₁ to 16ₙ to the OS template input area 10h (selects an OS template from a pull-down list of the OS template input area 10h).

When data necessary to each input area is input and the execution button 10k is clicked on the virtual machine setting screen illustrated in Fig. 10, the management machine 21 generates virtual machines 16₁ to 16ₙ on the physical servers 13, 13₁ to 13ₙ (virtual machine generating means), sets the capacities of the generated virtual machines 16₁ to 16ₙ respectively for the virtual machines 16₁ to 16ₙ (capacity setting means), and assigns the generated virtual machines 16₁ to 16ₙ to the user (first virtual machine assigning means). The management machine 21 generates a predetermined IP address for each one of the virtual machines 16₁ to 16ₙ assigned by the first virtual machine assigning means and sets the generated IP addresses to the virtual machines 16₁ to 16ₙ (first IP address setting means).

When the setting of the virtual machines 16₁ to 16ₙ is completed, as illustrated in Figs. 1 to 4, the first to n-th routers 14₁ to 14ₙ virtualized on the physical security routers 11₁ to 11ₙ and the first to n-th virtual firewalls 15₁ to 15ₙ virtualized on the physical security routers 12₁ to 12ₙ are connected to each other through the global networks 17₁ to 17ₙ, and the first to n-th virtual firewalls 15₁ to 15ₙ and the virtual machines 16₁ to 16ₙ are respectively connected to each other through the private networks 18₁ to 18ₙ.

The management machine 21 stores the user identifier and the machine name, the number of CPUs, the memory size, the number of disks, the disk capacity, the OS template, and the IP address, which have been input, in the hard disk in the state being associated with one another. When those are stored, the management machine 21 displays the registered user information list screen illustrated in Fig. 8 on the display 22 again. When the clear button 10l is clicked on the virtual machine setting screen illustrated in Fig. 10, the data input to each area is eliminated, and the inputting of data is performed again from the start. When the cancel button 10m is clicked, the screen is returned to the registered user information list screen illustrated in Fig. 8.

Since the system 10 for providing virtual machines can freely assign the virtual machines 16₁ to 16ₙ in accordance with the use form, the use frequency, the use method, and the like of a user using the virtual machines 16₁ to 16ₙ, virtual machines 16₁ to 16ₙ that are not necessary to the user are not assigned, and the virtual machines 16₁ to 16ₙ can be effectively used without any waste in an optimal environment by users. In addition, since the system 10 can set mutually-different capacities to the virtual machines 16₁ to 16ₙ, virtual machines 16₁ to 16ₙ having different capacities can be freely assigned in accordance with the use form, the use frequency, the use method, and the like of each user using respective virtual machines 16₁ to 16ₙ, virtual machines 16₁ to 16ₙ each having performance that is not necessary to the user or virtual machines 16₁ to 16ₙ each having insufficient performance are not assigned, and the virtual machines 16₁ to 16ₙ having optimal capacities can be used by the users.

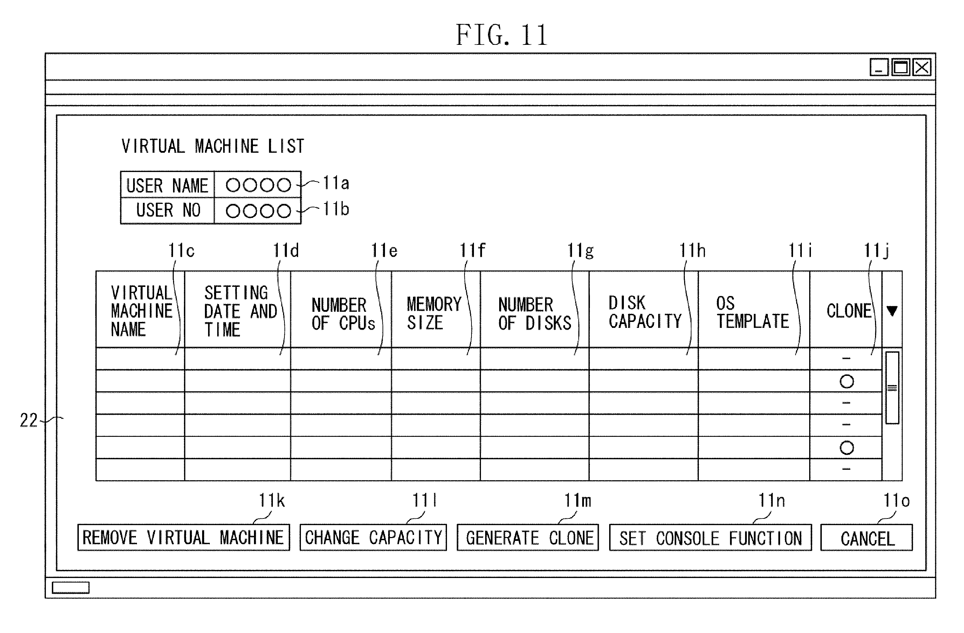

Fig. 11 is a diagram that illustrates an example of the virtual machine list screen displayed on the display 22 of the management machine 21. In a case where the virtual machines 16₁ to 16ₙ (including clones of the virtual machines 16₁ to 16ₙ) assigned to the user are to be removed, the management company inverts a specific user name out of user names displayed in the user name display area 8b of the registered user information list screen illustrated in Fig. 8 and then clicks on the virtual machine list 8m. When the virtual machine list 8m is clicked, the management machine 21 displays the virtual machine list screen (including the capacities of the virtual machines 16₁ to 16ₙ, the capacities of the clones of the virtual machines 16₁ to 16ₙ, the changed capacities of the virtual machines 16₁ to 16ₙ, and the changed capacities of the clones of the virtual machines 16₁ to 16ₙ) illustrated in Fig. 11 on the display 22 (a first capacity visualizing means, a second capacity visualizing means, and a capacity change visualizing means). In addition, the management company receives a request for removing the virtual machines 16₁ to 16ₙ from the user in advance.

On the virtual machine list screen illustrated in Fig. 11, a user name display area 11a in which a user name is displayed, a user number display area 11b in which a user No. is displayed, a virtual machine name display area 11c in which a set virtual machine name is displayed, a set date and time display area 11d in which set date and time is displayed, a CPU number display area 11e in which the numbers of the CPUs of the virtual machines 16₁ to 16ₙ displayed in the virtual machine name display area 11c are displayed, a memory size display area 11 f in which a memory size is displayed, a disk number display area 11g in which the number of disks is displayed, a disk capacity display area 11h in which a disk capacity is displayed, an OS template display area 11i in which an OS template is displayed, and a clone display area 11j representing whether or not the virtual machines 16₁ to 16ₙ are clones are displayed. In addition, a virtual machine removing button 11k, a capacity change button 111, a clone generation button 11m, a console function setting button 11n, and a cancel button 11o are displayed. When the cancel button 11o is clicked, the screen is returned to the registered user information list screen illustrated in Fig. 8.

In a case where the set virtual machines 16₁ to 16ₙ (the clones of the virtual machines 16₁ to 16ₙ) are to be removed, the management company inverts one, two, or more virtual machine names to be removed out of the virtual machine names displayed in a virtual machine name display area 11d of the virtual machine list screen illustrated in Fig. 11 and then clicks on the virtual machine removing button 11k. When the removing button 11k is clicked, the management machine 21, although not illustrated in the figure, displays a removal confirmation screen on the display 22. On the removal confirmation screen, a virtual machine name that is a removal target, a removal confirmation button, and a cancel button are displayed. When the cancel button is clicked, the screen is returned to the virtual machine list screen illustrated in Fig. 11. When the removal confirmation button is clicked, the management machine 21 removes the virtual machines 16₁ to 16ₙ or the clones (including IP addresses) that are removal targets from the hard disk (a first virtual machine removing means and a second virtual machine removing means). The management machine 21 removes the virtual machine 16₁ to 16ₙ or the clones from the hard disk and then displays the virtual machine list screen illustrated in Fig. 11 on the display 22 again. On the virtual machine list screen after the removal of the virtual machines 16₁ to 16ₙ or the clones, the virtual machine 16₁ to 16ₙ or the clones that have been removed are eliminated.

The system 10 for providing virtual machines can freely remove the virtual machines 16₁ to 16ₙ and the clones, which become unnecessary, out of the virtual machines 16₁ to 16ₙ and the clones of the virtual machines 16₁ to 16ₙ that have been assigned, and accordingly, the waste of the virtual machines 16₁ to 16ₙ and the clones can be omitted with the use form, the use frequency, the use method, and the like of the virtual machines 16₁ to 16ₙ and the clones being considered. Therefore, the virtual machines 16₁ to 16ₙ and the clones can be effectively used without any waste in the optimal environment.

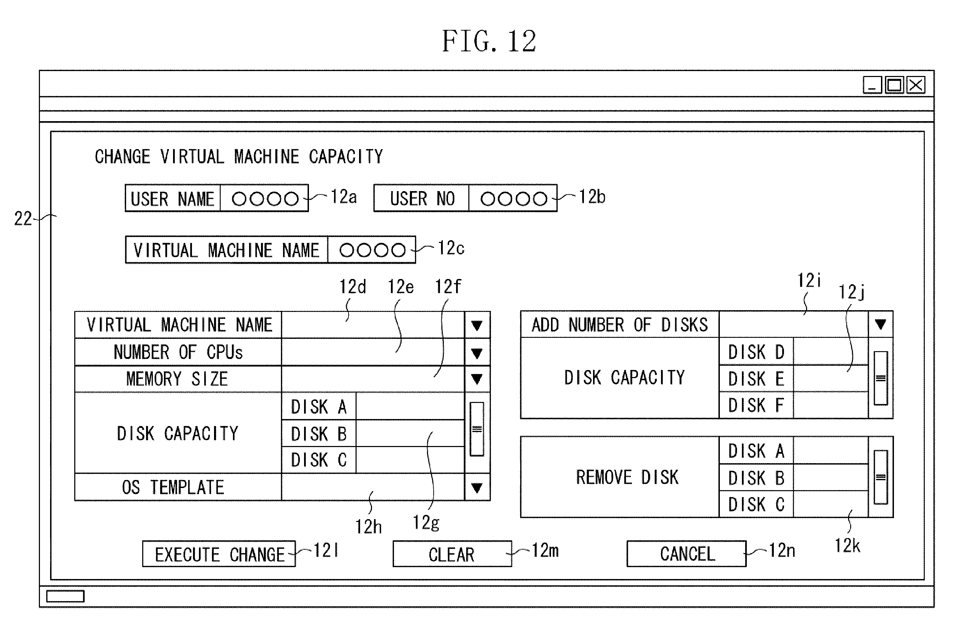

Fig. 12 is a diagram that illustrates an example of a virtual machine capacity change screen displayed on the display 22 of the management machine 21. In a case where the capacities of the virtual machine 16₁ to 16ₙ (including the clones of the virtual machines 16₁ to 16ₙ) assigned to the user are to be changed, the management company inverts a virtual machine name of which the capacity is changed out of the virtual machine names displayed in the virtual machine name display area 11d of the virtual machine list screen illustrated in Fig. 11 and then clicks on the capacity change button 11l. When the change button 11l is clicked, the management machine 21 displays the virtual machine capacity change screen illustrated in Fig. 12 on the display 22. In addition, the management company receives a request for changing capacity of the virtual machines 16₁ to 16ₙ from the user in advance.

On the virtual machine capacity change screen illustrated in Fig. 12, a user name display area 12a in which a user name is displayed, a user number display area 12b in which a user No. is displayed, a virtual machine name display area 12c in which a set virtual machine name is displayed, a virtual machine name input area 12d to which a new virtual machine name is input, a CPU number display area 12e in which the number of CPUs is displayed, a memory size display area 12f in which a memory size is displayed, a disk capacity display area 12g in which a disk capacity is displayed, and an OS template display area 12h in which an OS template is displayed are displayed. In addition, a disk number increase input area 12i, a disk capacity input area 12j of an additional disk, a disk removal area 12k, a change execution button 121, a clear button 12m, and a cancel button 12n are displayed. When the cancel button 12n is clicked, the screen is returned to the virtual machine list screen illustrated in Fig. 11. In the changing of the capacity, at least one of the number of CPUs, the memory size, the number of disks, the disk capacity, and the OS template can be changed.

In a case where the set capacities of the virtual machines 16₁ to 16ₙ and the clones are to be changed, the management company checks the user name or the user No. and the virtual machine name on the virtual machine capacity change screen illustrated in Fig. 12 and then changes each capacity. In a case where the virtual machine name is to be changed, a new machine name is input to the virtual machine name input area 12d. In a case where the number of CPUs is to be changed, the number of CPUs is increased or decreased on the CPU number display area 12e in which the number of CPUs is displayed. In a case where the memory size is to be increased or decreased, the memory size is increased or decreased on the memory size display area 12f in which the memory size is displayed. In a case where the disk capacity is to be increased or decreased, the disk capacity is increased or decreased in the disk capacity display area 12g in which the disk capacity is displayed. In a case where the OS template is to be changed, the OS template is changed in the OS template display area 12h in which the OS template is displayed.

In a case where the number of disks is to be increased, the number of additional disks is designated in the disk number increase input area 12i (the number of additional disks is selected from a pull-down list of the disk number increase input area 12i), and the disk capacity of each disk added to the disk capacity input area 12j is input (a disk capacity is selected from a pull-down list of the disk capacity input area 12j). On the other hand, in a case where a disk is to be removed, the disk to be removed is designated in the disk removal area 12k (the disk to be removed is selected from a pull-down list of the disk removal area 12k).

After those capacities are changed, the change execution button 121 is clicked. When the change execution button 121 is clicked, the management machine 21, although not illustrated in the figure, displays a change confirmation screen on the display 22. On the change confirmation screen, a virtual machine name display area in which a machine name (in a case where the machine name is changed, the machine name) that is the change target is displayed, a capacity display area in which the number of CPUs after the change, the memory size, the number of disks, the disk capacities, and the OS template are displayed, a change confirmation button, and a cancel button are displayed. When the cancel button is clicked, the screen is returned to the virtual machine list screen illustrated in Fig. 11. When the change confirmation button is clicked, the management machine 21 stores the user identifier, the changed machine name, the increased or decreased number of CPUs, the increased or decreased memory size, the increased or decreased disk capacity, and the changed OS template in the hard disk in the state being associated with one another (capacity changing means). When those are stored, the management machine 21 displays the virtual machine list screen illustrated in Fig. 11 on the display 22 again.

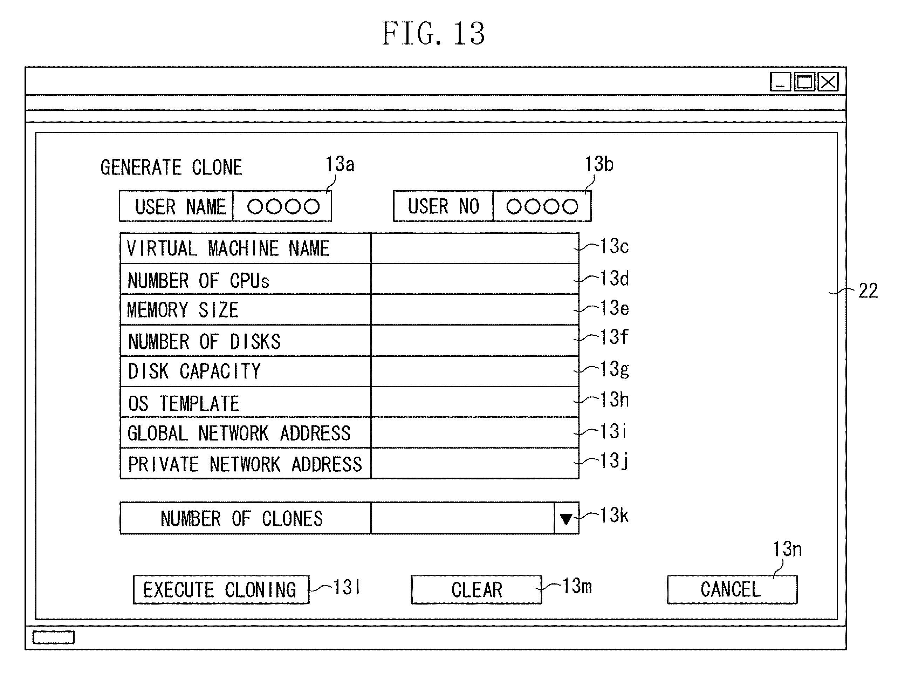

Fig. 13 is a diagram that illustrates an example of a clone generation screen displayed on the display 22 of the management machine 21. In a case where clones (copies) of virtual machines 16₁ to 16ₙ that are the same as the virtual machines 16₁ to 16ₙ assigned to the user are to be generated, the management company inverts each virtual machine name of which the clone is to be generated out of the virtual machine names displayed in the virtual machine name display area 11d of the virtual machine list screen illustrated in Fig. 11 and then clicks on the clone generation button 11m. When the clone generation button 11m is clicked, the management machine 21 displays a clone generation screen illustrated in Fig. 13 on the display 22. In addition, the management company receives a request for generating the clones of the virtual machines 16₁ to 16ₙ from the user in advance.

On the clone generation screen illustrated in Fig. 13, a user name display area 13a in which a user name is displayed, a user number display area 13b in which a user No. is displayed, a virtual machine name display area 13c in which a set virtual machine name is displayed, a CPU number display area 13d in which the number of CPUs is displayed, a memory size display area 13e in which a memory size is displayed, a disk number display area 13f in which the number of disks is displayed, a disk capacity display area 13g in which a disk capacity is displayed, an OS template display area 13h in which an OS template is displayed, a global network address display area 13i in which the global network addresses of the virtual machines 16₁ to 16ₙ are displayed, and a private network address display area 13j in which the private network addresses of the virtual machines 16₁ to 16ₙ are displayed are displayed. In addition, a clone number input area 13k, a clone execution button 13l, a clear button 13m, and a cancel button 13n are displayed. When the cancel button 13n is clicked, the screen is returned to the virtual machine list screen illustrated in Fig. 11.

In a case where the clones of the set virtual machines 16₁ to 16ₙ are to be generated, the management company checks the user name, the user No., the virtual machine name, the number of CPUs, the memory size, the number of disks, the disk capacity, the OS template, the global network address, and the private network on the clone generation screen illustrated in Fig. 13, and then inputs the number of clones to be generated to the clone number input area (selects the number of clones from a pull-down list of the clone number input area), and clicks on the clone execution button 131.

When the clone execution button 13l is clicked, the management machine 21, although not illustrated in the figure, displays a clone confirmation screen on the display 22. On the clone confirmation screen, a virtual machine name display area in which the virtual machine name of the clone source is displayed, a capacity display area in which the number of CPUs of a clone, a memory size, a disk capacity, and an OS template are displayed, a clone confirmation button, and a cancel button are displayed. When the cancel button is clicked, the screen is returned to the virtual machine list screen illustrated in Fig. 11.

When the clone confirmation button is clicked, the management machine 21 generates the clones of the virtual machines 16₁ to 16ₙ on the physical servers 13, 13₁ to 13ₙ (clone generating means) and assigns the generated clones of the virtual machines 16₁ to 16ₙ to the user (second virtual machine assigning means). The management machine 21 generates a predetermined IP address for each one of the clones of the virtual machines 16₁ to 16ₙ assigned by the second virtual machine assigning means and sets the generated IP addresses to the virtual machines 16₁ to 16ₙ (second IP address setting means).

When the clones are generated on the physical servers 13, 13₁ to 13ₙ, as illustrated in Figs. 1 to 4, the first to n-th virtual routers 14₁ to 14ₙ virtualized on the physical security routers 11₁ to 11ₙ and the first to n-th virtual firewalls 15₁ to 15ₙ virtualized on the physical security routers 12₁ to 12ₙ are respectively connected to each other through the global networks 17₁ to 17ₙ, and the first to n-th virtual firewalls 15₁ to 15ₙ and the clones of the virtual machines 16₁ to 16ₙ are respectively connected to each other through the private networks 18₁ to 18ₙ.

The management machine 21 stores the user identifier, the virtual machine name of the clone source, and the virtual machine name of the clone (for example, a machine name + clone 1, a machine name + clone 2, or the like) in the hard disk in the state being associated with one another and stores the user identifier and the number of CPUs, the memory size, the number of disks, the disk capacity, the OS template, and the IP address of the clone in the hard disk in the state being associated with each other. In addition, the management machine stores the user identifier and the global network address in the hard disk in the state being associated with each other (global network setting means) and stores the private network address (including the network ID) in the hard disk in the state being associated with the user identifier (private network setting means). When those are stored, the management machine 21 displays the virtual machine list screen illustrated in Fig. 11 on the display 22 again.

The system 10 for providing virtual machines can generate clones that are the same as the virtual machines 16₁ to 16ₙ that have been already present, and, by freely copying (replicating) the virtual machines 16₁ to 16ₙ having the same functions, a plurality of virtual machines 16₁ to 16ₙ (clones) having the same functions can be generated in a speedy manner. By generating a plurality of virtual machines 16₁ to 16ₙ (clones) having the same functions in accordance with a user's request, the system 10 for providing virtual machines can respond to the needs of the virtual machines 16₁ to 16ₙ according to the use form, the use frequency, the use method, and the like of the virtual machines 16₁ to 16ₙ of the user in a speedy manner.

Next, in a case where a console function is set to the use form of virtual machines assigned to the user, the management company inverts a virtual machine name to which the console function is set out of the virtual machine names displayed in the virtual machine name display area 11d of the virtual machine list screen illustrated in Fig. 11 and then clicks on the console function setting button 11n. When the console function setting button 11n is clicked, the management machine 21 sets the console function to the virtual machines 16₁ to 16ₙ (including the clones of the virtual machines 16₁ to 16ₙ) that are console function setting targets (console function setting means). In addition, the management company receives a request for setting a console function to the virtual machines 16₁ to 16ₙ from the user in advance. The system 10 for providing virtual machines can realize a virtual console function in the virtual machines 16₁ to 16ₙ and the clones, and accordingly, other devices connected to the virtual machines 16₁ to 16ₙ or the clones thereof through the private networks 18₁ to 18ₙ can be used as consoles.

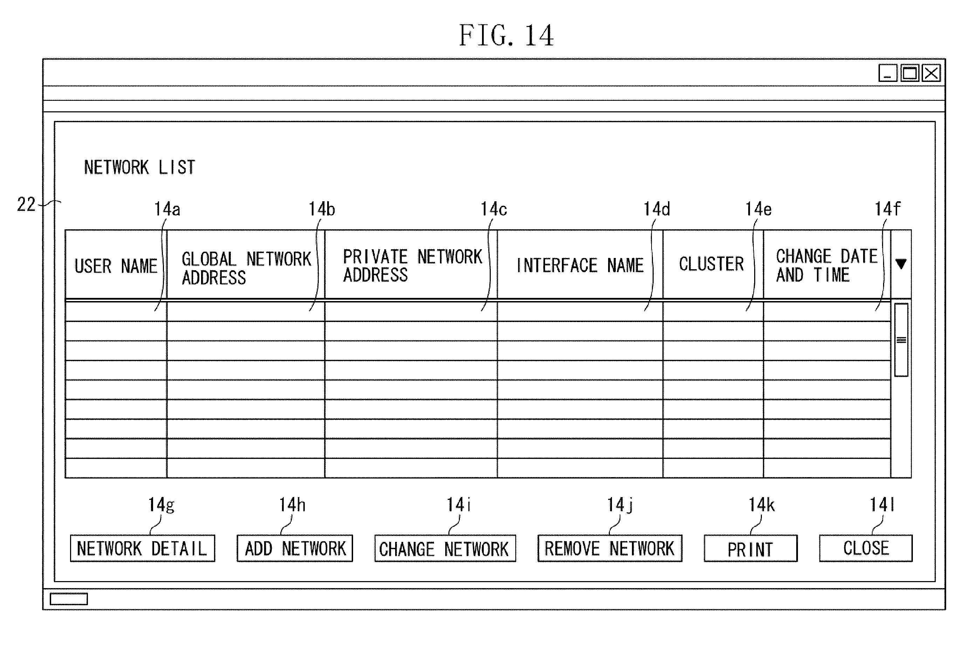

Fig. 14 is a diagram that illustrates an example of a network list screen displayed on the display 22 of the management machine 21. In a case where a list of networks set in advance is to be displayed, the management company clicks on the network list button 6c on the initial screen illustrated in Fig. 6. When the network list button 6c is clicked, the management machine 21 displays the list (including a changed list of networks) of networks illustrated in Fig. 14 on the display 22 (network visualizing means).

On the network list screen illustrated in Fig. 14, a user name display area 14a in which a user name is displayed, a global network display area 14b in which a global network is displayed, a private network display area 14c in which a private network is displayed, an interface name display area 14d in which an interface name is displayed, a cluster display area 14e in which a cluster is displayed, and a change date and time display area 14f in which changed date and time is displayed are displayed. In addition, a network detail button 14g, a network addition button 14h, a network change button 14i, a network removing button 14j, a print button 14k, and a close button 141 are displayed. When the print button 14k is clicked, the network list displayed on the network list screen is printed through a printer. When the close button 141 is clicked, the screen is returned to the initial screen illustrated in Fig. 6. By checking the network list screen illustrated in Fig. 14, the management company can acquire the use status of the network in this system 10.

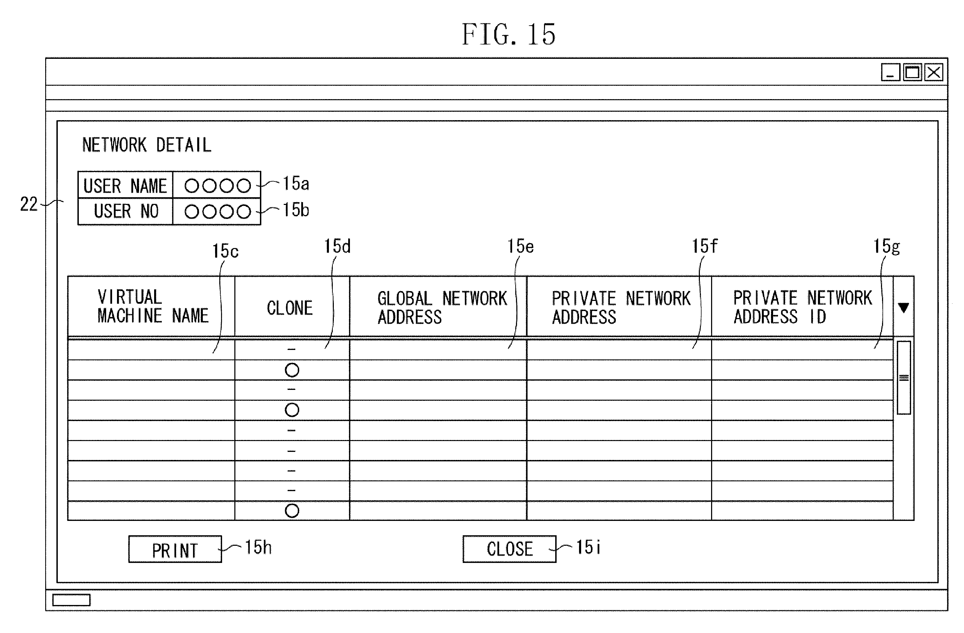

Fig. 15 is a diagram that illustrates an example of a network detail screen displayed on the display 22 of the management machine 21. In a case where network details of a specific user out of users represented in the network list are checked, the management company inverts the user name of which the network details are checked out of the user names displayed in the user name display area 14a of the network list screen illustrated in Fig. 14 and then clicks on the network detail button 14g. When the network detail button 14g is clicked, the management machine 21 displays details (including changed details of the network of each user) of the network of each user illustrated in Fig. 15 on the display 22 (network visualizing means).

On the network detail screen illustrated in Fig. 15, a user name display area 15a in which a user name is displayed, a user number display area 15b in which a user No. is displayed, a virtual machine name display area 15c in which a virtual machine name is displayed, a clone display area 15d that represents whether the virtual machines 16₁ to 16ₙ are clones, a global network address area 15e in which a global network address is displayed, a private network address display area 15f in which a private network address is displayed, a private network ID display area 15g in which a private network ID is displayed, a print button 15h, and a close button 15i are displayed. When the print button 15h is clicked, network details displayed on the network detail screen are printed through the printer. When the close button 15i is clicked, the screen is returned to the network list screen illustrated in Fig. 14. By checking the network detail screen illustrated in Fig. 15, the management company can acquire the use status of the network for each user.

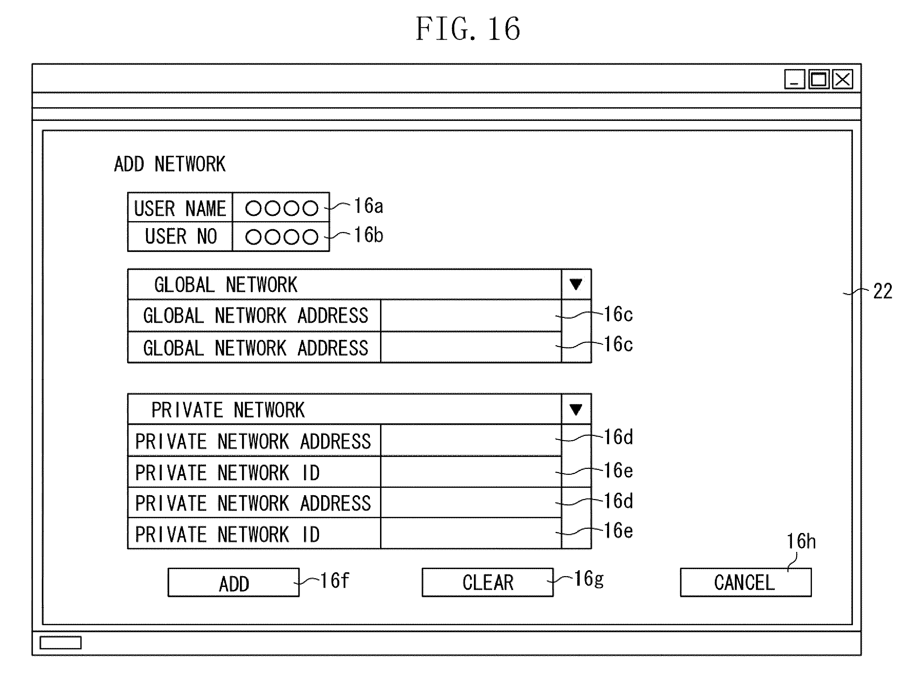

Fig. 16 is a diagram that illustrates an example of a network addition screen displayed on the display 22 of the management machine 21. In a case where a network is added to a specific user out of users displayed on the network list, the management company inverts a user name for which the network is added out of user names displayed in the user name display area 14a of the network list screen illustrated in Fig. 14 and then clicks on the network addition button 14h. When the network addition button 14h is clicked, the management machine 21 displays a network addition screen for each user illustrated in Fig. 16 on the display 22. In addition, the management company receives a request for adding a network from the user in advance.

On the network addition screen illustrated in Fig. 16, a user name display area 16a in which a user name is displayed, a user number display area 16b in which a user No. is displayed, a global network input area, a private network input area, an addition button 16f, a clear button 16g, and a cancel button 16h are displayed. The management company checks a user name and a user No. that are respectively displayed in the user name display area 16a and the user number display area 16b and then sets the number of global networks 17₁ to 17ₙ of which the number is desired by the user. More specifically, a global network address is input to the global network address input area 16c included in the global network input area (a global network address is selected from a pull-down list of the global network input area 16c).

In addition, the user sets private networks 18₁ to 18ₙ of which the number is desired by the user. More specifically, a private network address is input to the private network address input area 16d included in the private network input area (a private network address is selected from a pull-down list of the private network input area 16d), and a private network ID is input to the private network ID input area 16e included in the private network input area (a private network ID is selected from a pull-down list of the private network input area 16e).

After the address and the ID are input to the respective input areas, the management company clicks on the addition button 16f. When the addition button 16f is clicked, the management machine 21, although not illustrated in the figure, displays an addition confirmation screen on the display 22. On the addition confirmation screen, a user name display area in which a user name is displayed, a global network address display area in which a global network address is displayed, a private network address display area in which a private network address is displayed, an addition confirmation button, and a cancel button are displayed.

When the addition confirmation button is clicked, the management machine 21 stores the user identifier and the added global network address in the hard disk in the state being associated with each other (global network changing means) and stores the user identifier and the added private network address and the private network ID in the hard disk in the state being associated with each other (private network changing means). When those are stored, the management machine 21 displays a network list screen illustrated in Fig. 14 on the display 22 again. When the clear button 16g is clicked on the network addition screen illustrated in Fig. 16, data input to each input area is eliminated, and the inputting of data is performed from the start again. When the cancel button 16h is clicked, the screen is returned to the network list screen illustrated in Fig. 14.

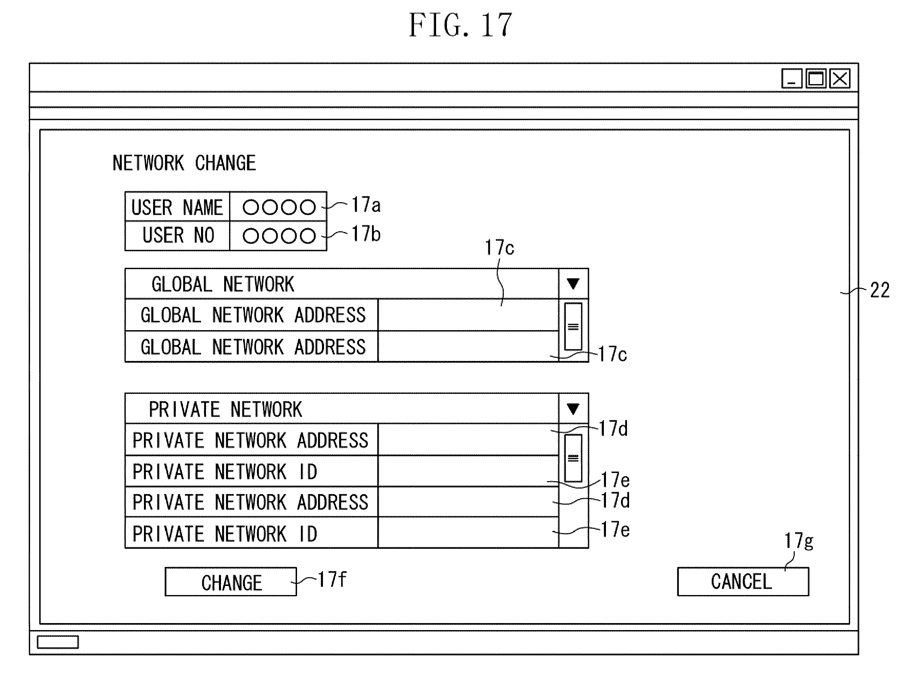

Fig. 17 is a diagram that illustrates an example of a network change screen displayed on the display 22 of the management machine 21. In a case where a network for a specific user out of users display in the network list is to be changed, the management company inverts a user name for which the network is changed out of user names displayed in the user name display area 14a of the network list screen illustrated in Fig. 14 and then clicks the network change button 14i. When the network change button 14i is clicked, the management machine 21 displays the network change screen for each user, which is illustrated in Fig. 17, on the display 22. In addition, the management company receives a request for changing the network from the user in advance.

On the network change screen illustrated in Fig. 17, a user name display area 17a in which a user name is displayed, a user number display area 17b in which a user No. is displayed, a global network display area, a private network display area, a change button 17f, and a cancel button 17g are displayed. The management company checks a user name and a user No. displayed respectively in the user name display area 17a and the user number display area 17b and then changes the global networks 17₁ to 17ₙ that are change targets. More specifically, a global network address that is the change target displayed in the global network address display area 17c out of the global network display areas is changed.

In addition, the private networks 18₁ to 18ₙ that are the change targets are changed. More specifically, a private network address of the change target displayed in the private network address display area out of the private network address display areas 17d is changed, and a private network ID of the change target displayed in the private network ID display area 17e out of the private network display areas is changed.

After the network address and the network ID of the change target are changed, the change button 17f is clicked. When the change button 17f is clicked, the management machine 21, although not illustrated in the figure, displays a change confirmation screen on the display 22. On the change confirmation screen, a user name display area in which a user name is displayed, a global network address display area in which a changed global network address is displayed, a private network address display area in which a changed private network address is displayed, a private network ID display area in which a changed private network ID is displayed, a change confirmation button, and a cancel button are displayed.

When the change confirmation button is clicked, the management machine 21 stores the user identifier and the changed global network address in the hard disk in the state being associated with each other (global network changing means) and stores the user identifier, the changed private network address, and the private network ID in the hard disk in the state being associated with one another (private network changing means). In addition, the global network address, the private network address, and the private network ID before the change are removed from the hard disk. When the network address and the network ID after the change are stored, the management machine 21 displays the network list screen illustrated in Fig. 14 on the display 22 again. When the cancel button is clicked on the network addition screen illustrated in Fig. 17 or the addition confirmation screen, the screen is returned to the network list screen illustrated in Fig. 14.

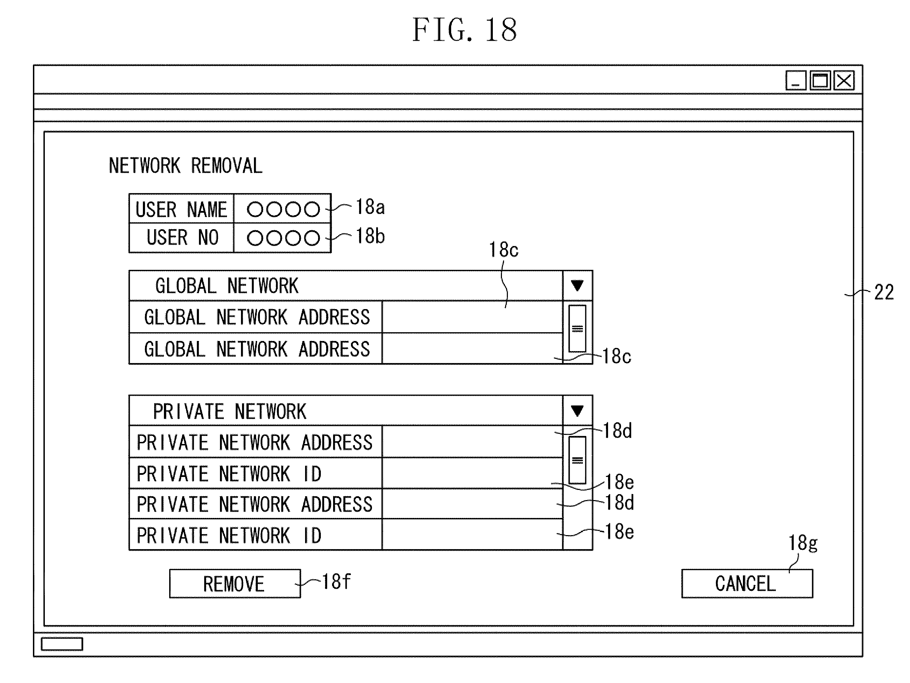

Fig. 18 is a diagram that illustrates an example of a network removal screen displayed on the display 22 of the management machine 21. In a case where the network of a specific user out of users displayed in the network list is to be removed, the management company inverts a user name for which the network is removed out of user names displayed in the user name display area 14a of the network list screen illustrated in Fig. 14 and then clicks on the network removing button 14j. When the network removing button 14j is clicked, the management machine 21 displays a network removal screen for each user that is illustrated in Fig. 18 on the display 22. In addition, the management company receives a request for removing a network from the user in advance.

On the network removal screen illustrated in Fig. 18, a user name display area 18a in which a user name is displayed, a user number display area 18b in which a user No. is displayed, a global network display area, a private network display area, a removal button 18f, and a cancel button 18g are displayed. The management company checks a user name and a user No. displayed respectively in the user name display area 18a and the user number display area 18b and then inverts a global network address of the removal target displayed in the global network address display area 18c out of the global network display areas. In addition, the private network address of the removal target displayed in the private network address input area 18d included in the private network input area is inverted, and the private network ID of the removal target displayed in the private network ID input area 18e included in the private network input area is inverted.

After the network address and the network ID of the removal target are changed, the removal button 18f is clicked. When the removal button 18f is clicked, the management machine 21, although not illustrated in the figure, displays a removal confirmation screen on the display 22. On the removal confirmation screen, a user name display area in which a user name is displayed, a global network address display area in which a global network address of the removal target is displayed, a private network address display area in which a private network address of the removal target is displayed, a private network ID display area in which a private network ID of the removal target is displayed, a removal confirmation button, and a cancel button are displayed.

When the removal confirmation button is clicked, the management machine 21 eliminates the global network address, the private network address, and the private network ID of the removal target from the hard disk (a global network changing means and a private network changing means). When the network address and the network ID are removed, the management machine 21 displays the network list screen illustrated in Fig. 14 on the display 22 again. When the cancel button is clicked on the network addition screen illustrated in Fig. 18 or the removal confirmation screen, the screen is returned to the network list screen illustrated in Fig. 14.

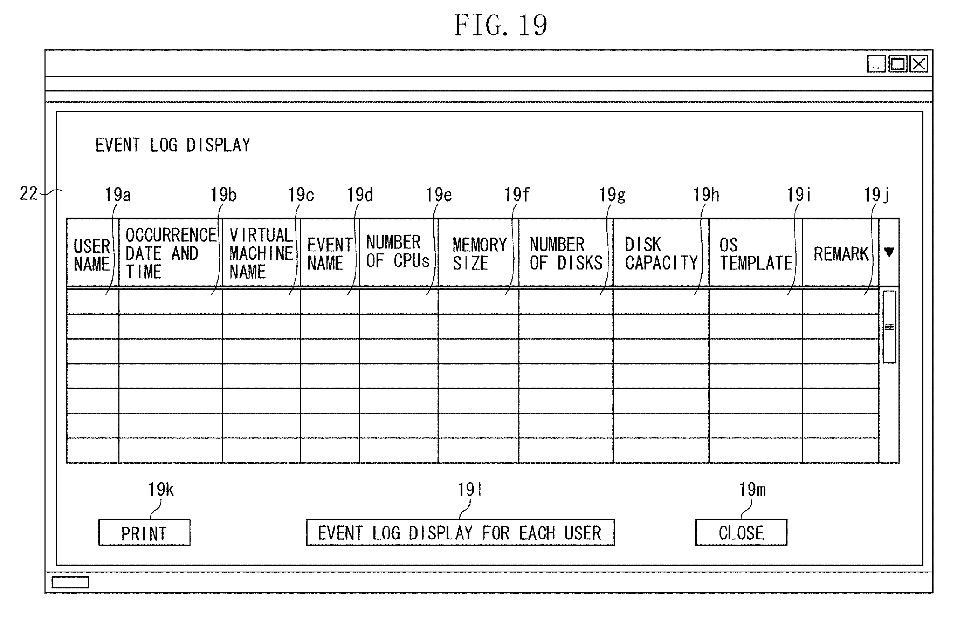

Fig. 19 is a diagram that illustrates an example of an event log display screen displayed on the display 22 of the management machine 21. In a case where event logs of the virtual machines 16₁ to 16ₙ of each user are to be displayed, the management company clicks on an event log list 6d on the initial screen illustrated in Fig. 6. When the event log list 6d is clicked, the management server 21 displays the event log display screen illustrated in Fig. 19 on the display 22. Here, the event log is a record of events (a machine form, a machine state, a machine operating status, and the like) that are performed by the virtual machines 16₁ to 16ₙ.

On the event log display screen illustrated in Fig. 19, a user name display area 19a in which a user name is displayed, an occurrence date and time display area 19b in which an event occurrence date and time is displayed, a virtual machine name display area 19c in which a virtual machine name is displayed, an event name display area 19d in which an event name is displayed, a CPU number display area 19e in which the number of CPUs is displayed, a memory size display area 19f in which a memory size is displayed, a disk number display area 19g in which the number of disks is displayed, a disk capacity display area 19h in which a disk capacity is displayed, an OS template display area 10i in which an OS template is displayed, and a remark display area 19j are displayed. In addition, a print button 19k, an event log display button 191 for each user, and a close button 19m are displayed. When the print button 19k is clicked, an event log displayed on the event log display screen is printed through the printer. When the close button 19m is clicked, the screen is returned to the initial screen illustrated in Fig. 6. By checking the event log display screen illustrated in Fig. 19, the management company can acquire the events in the virtual machines 16₁ to 16ₙ of all the users.

As the event names displayed in the event name display area 19d, there are a new virtual machine, virtual machine cloning, removal of a virtual machine, removal of a virtual machine clone, a change in the virtual machine name, an increase/decrease in the number of CPUs, an increase/decrease in the memory size, an increase/decrease in the number of disks, an increase/decrease in the disk capacity, removal of a disk, addition of a global network address, a change in a global network address, removal of a global network address, addition of a private network address, a change in a private network address, removal of a private network address, power on, and power off. As remarks displayed in the remark display area, there are a virtual machine name of a clone source, a virtual machine name before change, and an increased/decreased content.

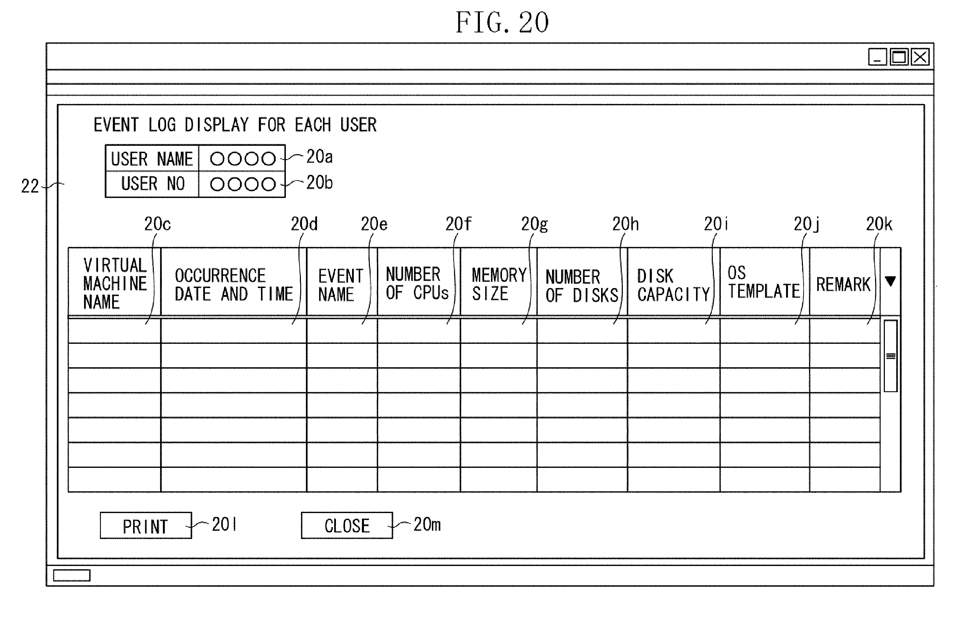

Fig. 20 is a diagram that illustrates an example of an event log display screen for each user that is displayed on the display 22 of the management machine 21. When the event log display button 191 for each user is clicked after the inversion of a user name of the event log display target out of user names displayed in the user name display area 19a of the event log display screen illustrated in Fig. 19 or when the event log display button 8n is clicked after the inversion of a user name of the target for displaying an event log out of user names displayed in the user name display area 8b of the registered user information list screen illustrated in Fig. 8, the management server 21 displays the event log display screen for each user that is illustrated in Fig. 20 on the display 22.

On the event log display screen for each user that is illustrated in Fig. 20, a user name display area 20a in which a user name is displayed, a user number display area 20b in which a user No. is displayed, a virtual machine name display area 20c in which a virtual machine name is displayed, an occurrence date and time display area 20d in which an event occurrence date and time is displayed, an event name display area 20e in which an event name is displayed, a CPU number display area 20f in which the number of CPUs is displayed, a memory size display area 20g in which a memory size is displayed, a disk number display area 20h in which the number of disks is displayed, a disk capacity display area 20i in which a disk capacity is displayed, an OS template display area 20j in which an OS template is displayed, and a remark display area 20k are displayed and a print button 201 and a close button 20m are further displayed. When the print button 201 is clicked, an event log displayed on the event log display screen for each user is printed through the printer. When the close button 20m is clicked, the screen is returned to the event log display screen illustrated in Fig. 19. By checking the event log display screen for each user that is illustrated in Fig. 20, the management company can acquire the events in the virtual machines 16₁ to 16ₙ of each user.

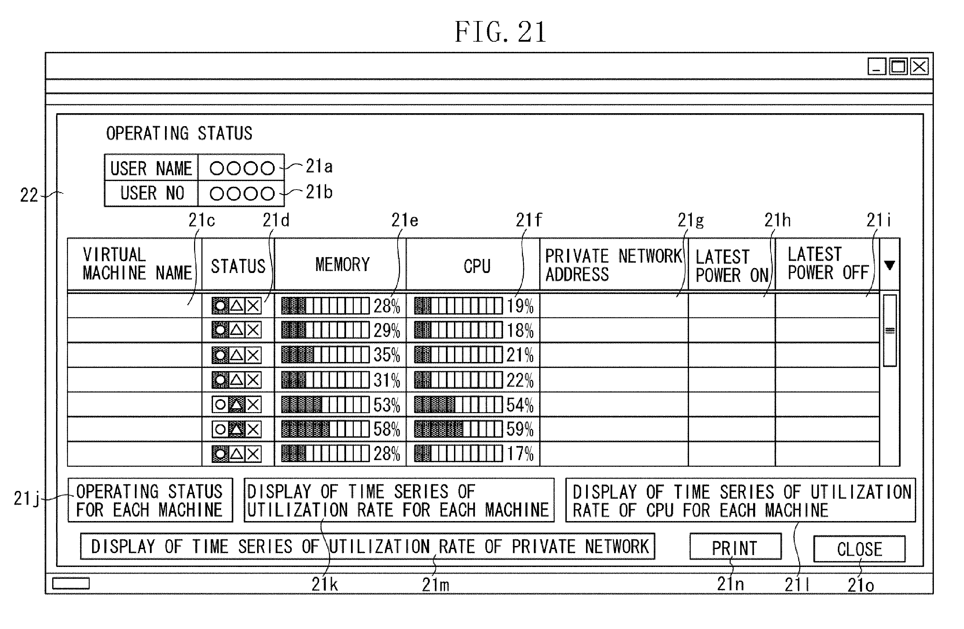

Fig. 21 is a diagram that illustrates an example of an operating status display screen displayed on the display 22 of the management machine 21. The management server 21 stores the user identifier, the virtual machine name, and the operating status (including the memory use rate, the CPU use rate, the private network use rate, and the year/month/date and time) of the virtual machine having the virtual machine name in the hard disk in the state being associated with one another. In addition, the management server stores the user identifier, the virtual machine name of the clone, and the operating status (including the memory use rate, the CPU use rate, the private network use rate, and the year/month/date and time) of the clone having the virtual machine name in the hard disk in the state being associated with one another. When the user name of the display target of the operating status out of the user names displayed in the user name display area 8b of the registered user information list screen illustrated in Fig. 8 is inverted, and then the operating status display button 8o is clicked, the management server 21 displays the operating status display screen for each user that is illustrated in Fig. 21 on the display 22 (operating status visualizing means).

On the operating status display screen illustrated in Fig. 21, a user name display area 21a in which a user name is displayed, a user number display area 21b in which a user No. is displayed, a virtual machine name display area 21c in which a virtual machine name is displayed, a state display area 21d in which a machine state is displayed, a memory use status display area 21e in which a memory use status is displayed, a CPU use status display area 21f in which a CPU use status is displayed, a private network address display area 21g in which a private network address is displayed, a latest power on date and time display area 21h in which a latest power-on date and time is displayed, and a latest power off date and time display area 21i in which a latest power off date and time is displayed are displayed. In addition, an operating status display button 21j for each virtual machine, a memory use rate time-series display button 21k for each virtual machine, a CPU use rate time-series display button 211 for each virtual machine, a private network use rate time-series display button 21m, a print button 21n, and a close button 21o are displayed. When the print button 21n is clicked, the operating status of each virtual machine that is displayed on the operating status display screen is printed through the printer. When the close button 21o is clicked, the screen is returned to the registered user information list screen illustrated in Fig. 8. By checking the operating status display screen illustrated in Fig. 21, the management company can acquired the operating statuses of the virtual machines 16₁ to 16ₙ of all the users.

In the state display area 21d, the states of the virtual machines 16₁ to 16ₙ are displayed. Here, "○" displayed in the state display area 21d represents a good state, "Δ" displayed in the state display area 21 d represents an attentive state, and "×" displayed in the state display area 21d represents a defective state. Alternatively, similar to the traffic light, it may be configured such that a blue display is used in a case where the state is good, a yellow display is used in a case where the state is attentive, and a red display is used in a case where the state is defective. In the memory use status display area 21 e, the current memory use rates of the virtual machines 16₁ to 16ₙ are displayed, and, in the CPU use status display area 21f, the current CPU use rates of the virtual machines 16₁ to 16ₙ are displayed. In the latest power-on date and time display area 21h, the latest date and time of power-on in each one of the virtual machines 16₁ to 16ₙ is displayed, and, in the latest power-off date and time display area 21i, the latest date and time of power-off in each one of the virtual machines 16₁ to 16ₙ is displayed.

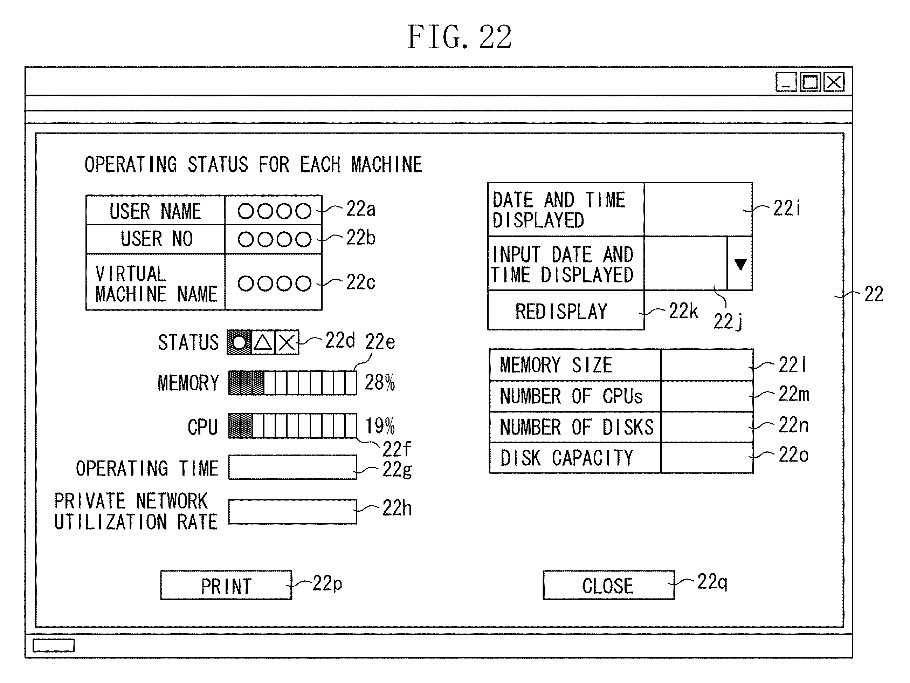

Fig. 22 is a diagram that illustrates an example of the operating status display screen that is displayed in the display 22 of the management machine 21. When a machine name of a display target of the operating status out of machine names displayed in the virtual machine name display area 21c of the operating status display screen illustrated in Fig. 21 is inverted, and the operating status display button 21j is clicked, the management server 21 displays the operating status display screen for each machine, which is illustrated in Fig. 22, on the display 22 (operating status visualizing means).

On the operating status display screen for each machine that is displayed in Fig. 22, a user name display area 22a in which a user name is displayed, a user number display area 22b in which a user No. is displayed, a virtual machine name display area 22c in which a virtual machine name is displayed, a state display area 22d in which a machine state is displayed, a memory use status display area 22e in which a memory use status is displayed, a CPU use status display area 22f in which a CPU use status is displayed, an operating time display area 22g in which an operating time of a virtual machine is displayed, a private network use rate display area 22h in which a private network use rate is displayed, a display date and time display area 22i in which display date and time is displayed, a display date and time input area 22j, and a redisplay button 22k are displayed. In addition, a memory size display area 221 in which a memory size is displayed, a CPU number display area 22m in which the number of CPUs is displayed, a disk number display area 22n in which the number of disks is displayed, a disk capacity display area 22o in which a disk capacity is displayed, a print button 22p, and a close button 22q are displayed.

When the print button 22p is clicked, the operating status that is displayed on the operating status display screen is printed through the printer. When the close button 22q is clicked, the screen is returned to the operating status display screen illustrated in Fig. 21. In the operating time display area 22g, the operating times of the virtual machines 16₁ to 16ₙ of the past to the present are displayed. In the private network use rate display area 22h, the use rates of the private networks 18₁ to 18ₙ to which the virtual machines 16₁ to 16ₙ displayed in the virtual machine name display area are connected are displayed. When a new display date and time is input to the display date and time input area 22j, and the redisplay button 22k is clicked, the management server 21 displays the operating status at the input date and time on the display 22 (operating status visualizing means). By checking the operating status display screen that is illustrated in Fig. 22, the management company can acquire the operating statuses of the virtual machines 16₁ to 16ₙ.

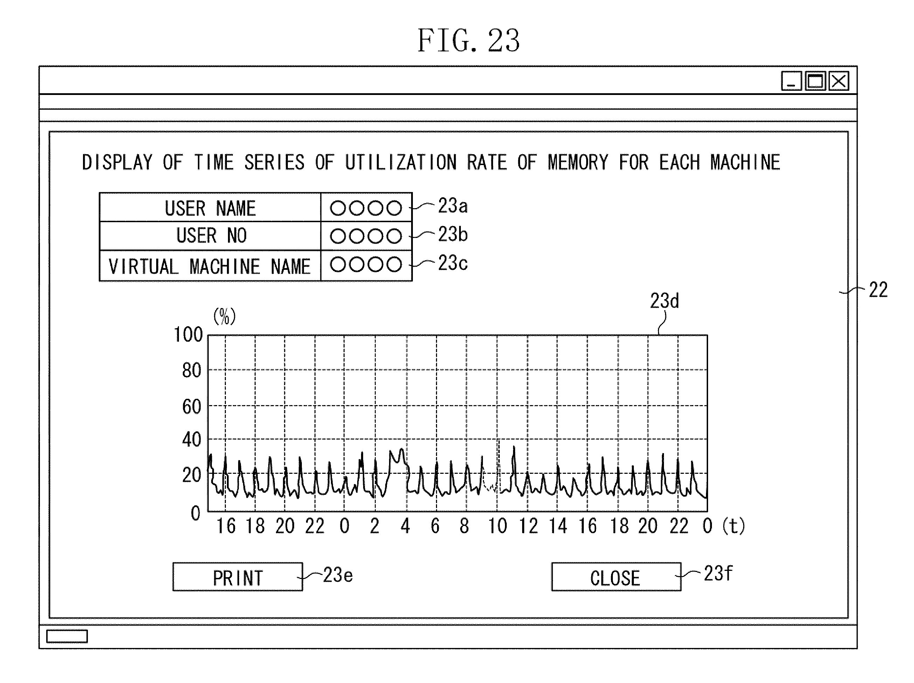

Fig. 23 is a diagram that illustrates an example of a memory use rate time-series display screen that is displayed on the display 22 of the management machine 21. When a machine name of which the memory use rate is the time-series display target out of machine names displayed in the virtual machine name display area 21c of the operating status display screen illustrated in Fig. 21 is inverted, and then the memory use rate time-series display button 21k is clicked, the management server 21 displays the memory use rate time-series display screen for each machine, which is illustrated in Fig. 23, on the display 22 (operating status visualizing means).

On the memory use rate time-series display screen that is illustrated in Fig. 23, a user name display area 23a in which a user name is displayed, a user number display area 23b in which a user No. is displayed, a virtual machine name display area 23c in which a virtual machine name is displayed, a memory use rate graph 23d that displays a memory use rate of the virtual machine in a time series, a print button 23e, and a close button 23f are displayed. When the print button 23e is clicked, the memory use rate displayed on the memory use rate time-series display screen is printed through the printer. When the close button 23f is clicked, the screen is returned to the operating status display screen illustrated in Fig. 21. In the memory use rate graph 23d, the memory use rate (%) is represented in the vertical axis, and the elapsed time is represented in the horizontal axis. As the elapsed time, several elapsed times for every month, every date, and every hour may be displayed. By checking the memory use rate time-series display screen that is illustrated in Fig. 23, the management company can acquire the memory use rates of the past to the present for the virtual machines 16₁ to 16ₙ in time series.

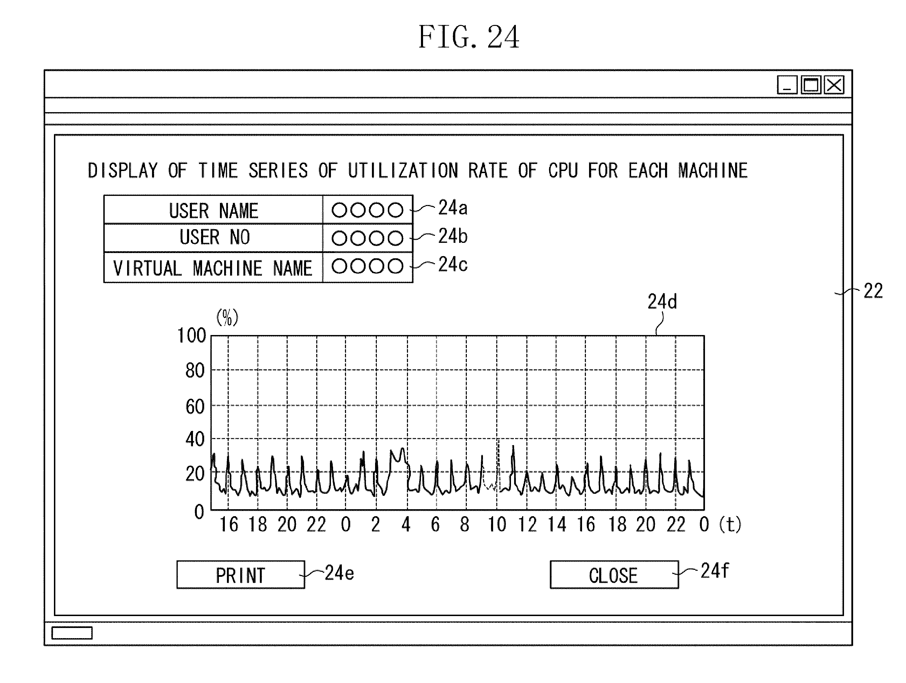

Fig. 24 is a diagram that illustrates an example of a CPU use rate time-series display screen that is displayed on the display 22 of the management machine 21. When a machine name of which the CPU use rate is the display target out of machine names displayed in the virtual machine name display area 21c of the operating status display screen illustrated in Fig. 21 is inverted, and then the CPU use rate time-series display button 211 is clicked, the management server 21 displays the CPU use rate time-series display screen for each machine, which is illustrated in Fig. 24, on the display 22 (operating status visualizing means).

On the CPU use rate time-series display screen that is illustrated in Fig. 24, a user name display area 24a in which a user name is displayed, a user number display area 24b in which a user No. is displayed, a virtual machine name display area 24c in which a virtual machine name is displayed, a CPU use rate graph 24d that displays a CPU use rate of the virtual machine in a time series, a print button 24e, and a close button 24f are displayed. When the print button 24e is clicked, the CPU use rate displayed on the CPU use rate time-series display screen is printed through the printer. When the close button 24f is clicked, the screen is returned to the operating status display screen illustrated in Fig. 21. In the CPU use rate graph 24d, the CPU use rate (%) is represented in the vertical axis, and the elapsed time is represented in the horizontal axis. As the elapsed time, several elapsed times for every month, every date, and every hour may be displayed. By checking the CPU use rate time-series display screen that is illustrated in Fig. 24, the management company can acquire the CPU use rates of the past to the present for the virtual machines 16₁ to 16ₙ in time series.

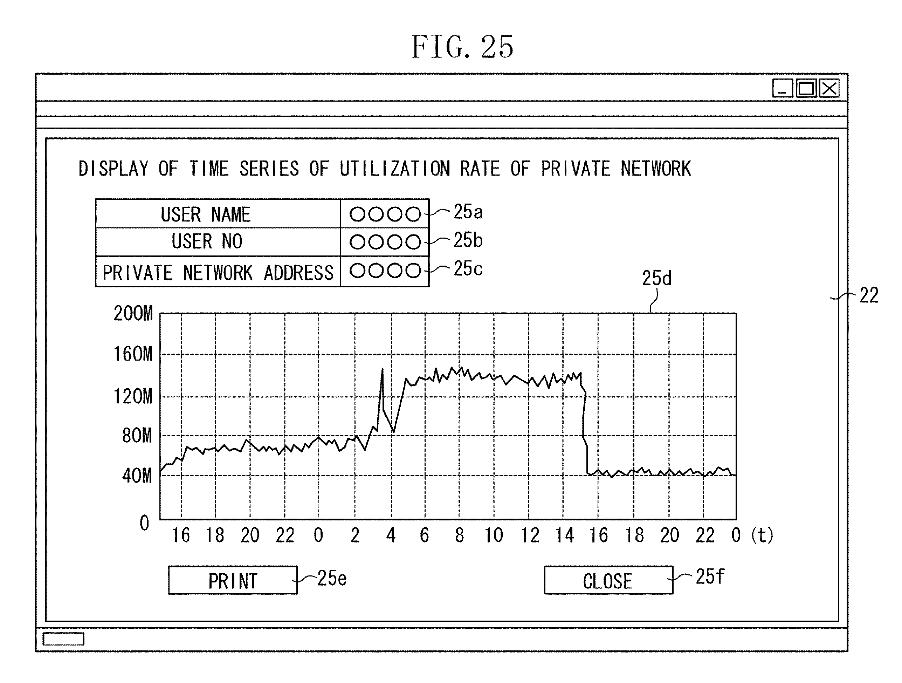

Fig. 25 is a diagram that illustrates an example of a private network use rate time-series display screen that is displayed on the display 22 of the management machine 21. When a private network address (or a machine name) of the private network use rate display target out of private network addresses (or machine names) displayed in a private network address name display area 2 1 g (or the virtual machine name display area 21c) of the operating status display screen illustrated in Fig. 21 is inverted, and then the private network use rate time-series display button 21m is clicked, the management server 21 displays the private network use rate time-series display screen, which is illustrated in Fig. 25, on the display 22 (operating status visualizing means).

On the private network use rate time-series display screen that is illustrated in Fig. 25, a user name display area 25a in which a user name is displayed, a user number display area 25b in which a user No. is displayed, a private network address display area 25c in which a private network address is displayed, a private network use rate graph 25d that displays the private network use rate of the private network in a time series, a print button 25e, and a close button 26f are displayed. When the print button 25e is clicked, the private network use rate displayed on the private network use rate time-series display screen is printed through the printer. When the close button 25f is clicked, the screen is returned to the operating status display screen illustrated in Fig. 21. In the private network use rate graph 25d, the private network use rate (%) is represented in the vertical axis, and the elapsed time is represented in the horizontal axis. As the elapsed time, several elapsed times for every month, every date, and every hour may be displayed. By checking the private network use rate time-series display screen that is illustrated in Fig. 25, the management company can acquire the private network use rates of the past to the present for the virtual machines 16₁ to 16ₙ in time series.

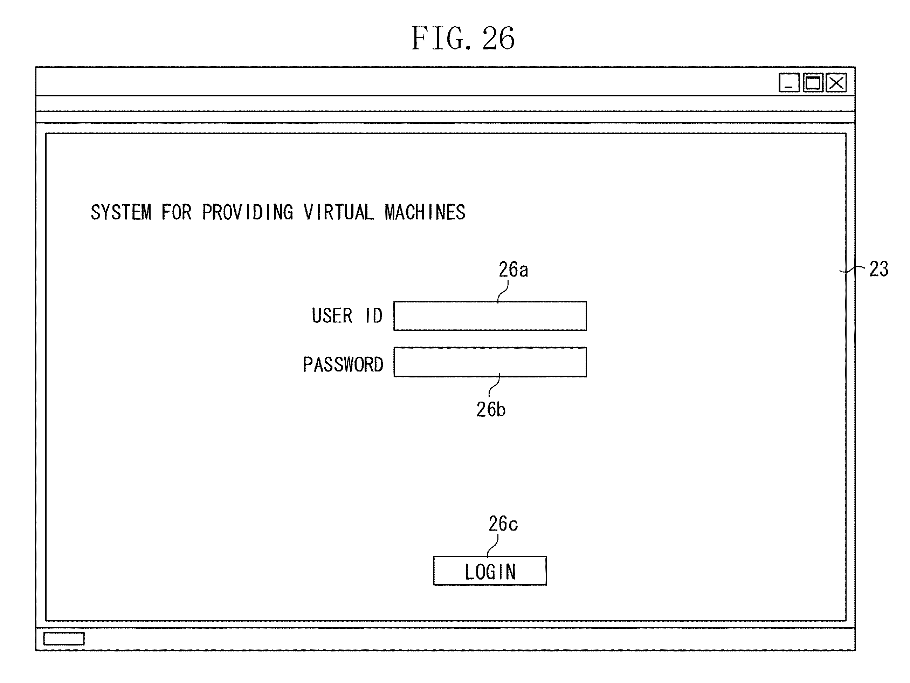

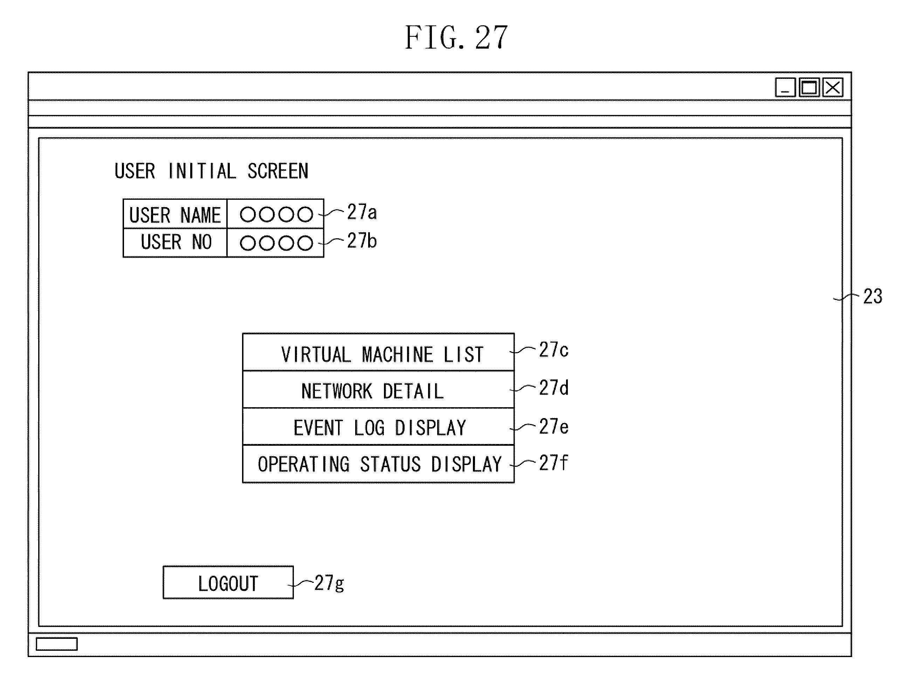

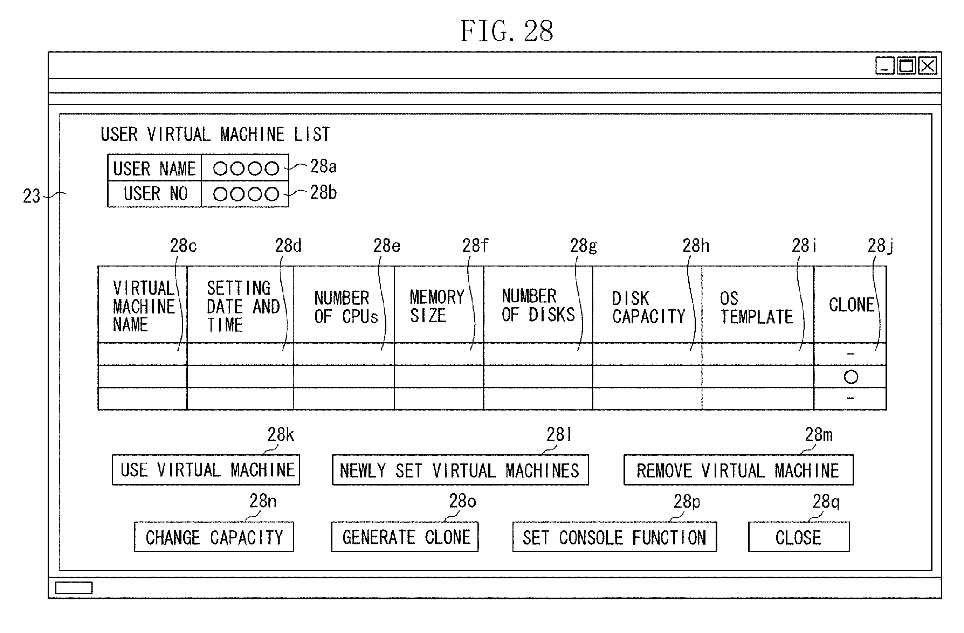

Fig. 26 is a diagram that illustrates an example of a login screen displayed on the display 23 of the user servers 19₁ to 19ₙ. Fig. 27 is a diagram that illustrates an example of a user initial screen displayed on the displays 23 of the user servers 19₁ to 19ₙ. Fig. 28 is a diagram that illustrates an example of a user virtual machine list screen displayed on the display 23 of the user servers 19₁ to 19ₙ. In a case where a user uses this system 10, the user logins the system 10 using a user password and a user password transmitted from the management company through a mail. By operating the user servers 19₁ to 19ₙ and clicking on an icon (not illustrated in the figure) representing this system 10, the login screen illustrated in Fig. 26 is displayed on the displays 23 of the user servers 19₁ to 19ₙ. On the login screen illustrated in Fig. 26, a user ID input area 26a, a user password input area 26b, and a login button 26c are displayed.

The user inputs a user ID to the user ID input area 26a, inputs a password to the password input area 26b, and then clicks on the login button 26c. When the login button 26c is clicked, the user initial screen illustrated in Fig. 27 is displayed on the displays 23 of the user servers 19₁ to 19ₙ. On the user initial screen illustrated in Fig. 27, a user name display area 27a in which a user name is displayed, a user number display area 27b in which a user No. is displayed, a virtual machine list button 27c, a network detail button 27d, an event display button 27e, an operating status display button 27f, and a logout button 27g are displayed.

When the user clicks on the virtual machine list button 27c, on the displays 23 of the user servers 19₁ to 19ₙ, the user virtual machine list screen illustrated in Fig. 28 is displayed (including the capacities of the virtual machines 16₁ to 16ₙ, the capacities of the clones of the virtual machines 16₁ to 16ₙ, the changed capacities of the virtual machines 16₁ to 16ₙ, and the changed capacities of the clones of the virtual machines 16₁ to 16ₙ) (first capacity visualizing means, second capacity visualizing means, and capacity change visualizing means). In addition, in the user servers 19₁ to 19ₙ, only data of the virtual machines 16₁ to 16ₙ used by the user having the user servers 19₁ to 19ₙ is displayed (visualized), but data of the virtual machines 16₁ to 16ₙ used by the other users is not displayed (non-visualized).

On the user virtual machine list screen illustrated in Fig. 28, a user name display area 28a in which a user name is displayed, a user number display area 28b in which a user No. is displayed, a virtual machine name display area 28c in which a set virtual machine name is displayed, a set date and time display area 28d in which set date and time is displayed, a CPU number display area 28e in which the number of the CPUs is displayed, a memory size display area 28f in which a memory size is displayed, a disk number display area 28g in which the number of disks is displayed, a disk capacity display area 28h in which a disk capacity is displayed, an OS template display area 28i in which an OS template is displayed, and a clone display area 28j representing whether or not the virtual machine is a clone are displayed. In addition, a virtual machine use button 28k, a virtual machine newly-setting button 281, a virtual machine removing button 28m, a capacity change button 28n, a clone generation button 28o, a console function setting button 28p, and a close button q are displayed. When the close button q is clicked, the screen is returned to the user initial screen illustrated in Fig. 27. By checking the user virtual machine list screen illustrated in Fig. 28, a user can acquire the virtual machines 16₁ to 16ₙ used by the user and the capacities of the virtual machines 16₁ to 16ₙ.

In order to allow the assigned virtual machines 16₁ to 16ₙ to be used by the user, the user inverts a virtual machine name (or a plurality of virtual machines) to be used out of virtual machine names displayed in the user virtual machine list screen illustrated in Fig. 28 and then clicks on the virtual machine use button 28k. When the virtual machine use button 28k is clicked, the inverted virtual machine can be used. By using the virtual machines 16₁ to 16ₙ, the user can provide various services through the Internet 20 and can receive various services through the Internet 20.

In order for the user to set new virtual machines 16₁ to 16ₙ, the user clicks on the virtual machine newly-setting button 281 on the user virtual machine list screen illustrated in Fig. 28. When the virtual machine newly-setting button 281 is clicked, the virtual machine setting screen as illustrated in Fig. 10 is displayed on the displays 23 of the user servers 19₁ to 19ₙ (refer to Fig. 10). Similar to the description presented for the virtual machine setting screen illustrated in Fig. 10, the user inputs necessary data to each input area and clicks on the execution button.

When the execution button is clicked, the system 10 (management server 21) generates the virtual machines 16₁ to 16ₙ on the physical servers 13, 13₁ to 13ₙ (virtual machine generating means), sets the capacities of the generated virtual machines 16₁ to 16ₙ respectively for the virtual machines 16₁ to 16ₙ (capacity setting means), and assigns the generated virtual machines 16₁ to 16ₙ to the user (first virtual machine assigning means). The management machine 21 generates predetermined IP addresses respectively for the virtual machines 16₁ to 16ₙ assigned by the first virtual machine assigning means and sets the generated IP addresses respectively to the virtual machines 16₁ to 16ₙ (first IP address setting means). The system 10 stores the user identifier and the machine name, the number of CPUs, the memory size, the number of disks, the disk capacity, the OS template, and the IP address, which have been input, in the hard disk of the management server 21 in the state being associated with one another. On the displays 23 of the user servers 19₁ to 19ₙ, the user virtual machine list screen illustrated in Fig. 28 is displayed again. A user can freely increase the number of the virtual machines 16₁ to 16ₙ used by the user in accordance with the use form, the use frequency, the use method, and the like of the virtual machines 16₁ to 16ₙ.

In order for the user to remove one or more virtual machines 16₁ to 16ₙ, the user inverts a virtual machine name (or a plurality of virtual machine names) to be removed out of virtual machine names displayed in the virtual machine name display area 28c of the user virtual machine list screen illustrated in Fig. 28 and then clicks on the virtual machine removing button 28m. When the removing button 28m is clicked, although not illustrated in the figure, a removal confirmation screen is displayed on the displays 23 of the user servers 19₁ to 19ₙ. On the removal confirmation screen, virtual machine names that are removal targets, a removal confirmation button, and a cancel button are displayed. When the removal confirmation button is clicked, the system 10 (the management server 21) removes the virtual machines 16₁ to 16ₙ (including the IP addresses thereof) that are the removal targets from the hard disk (first virtual machine removing means and second virtual machine removing means). On the displays 23 of the user servers 19₁ to 19ₙ, the user virtual machine list screen illustrated in Fig. 28 is displayed again. A user can freely remove the virtual machines 16₁ to 16ₙ used by the user in accordance with the use form, the use frequency, the use method, and the like of the virtual machines 16₁ to 16ₙ.

In order for the user to change the capacities of the virtual machines 16₁ to 16ₙ (including the clones of the virtual machines 16₁ to 16ₙ), the user inverts virtual machine names of which the capacities are to be changed out of virtual machine names displayed in the virtual machine name display area 28c of the user virtual machine list screen illustrated in Fig. 28 and then clicks on the capacity change button 28n. When the capacity change button 28n is clicked, the virtual machine capacity change screen as illustrated in Fig. 12 is displayed on the displays 23 of the user servers 19₁ to 19ₙ (refer to Fig. 12). After the capacities are changed in accordance with the sequence as described with reference to the virtual machine capacity change screen illustrated in Fig. 12, the user clicks on the change execution button.

When the change execution button is clicked, although not illustrated in the figure, a change confirmation screen is displayed on the displays 23 of the user servers 19₁ to 19ₙ. On the change confirmation screen, a virtual machine name display area in which a virtual machine name (in a case where the machine name is changed, the changed machine name) of the change target is displayed, a capacity display area in which the number of CPUs, the memory size, the disk capacity, and the OS template after the change are displayed, a change confirmation button, and a cancel button are displayed. When the change confirmation button is clicked, the system (management server 21) stores the user identifier, the changed machine name, the increased/decreased number of CPUs, the increased/decreased memory size, the increased/decreased disk capacity, and the changed OS template in the hard disk of the management server 21 in the state being associated with one another (capacity changing means). On the displays 23 of the user servers 19₁ to 19ₙ, the user virtual machine list screen illustrated in Fig. 28 is displayed again. A user can freely change the capacities of the virtual machines 16₁ to 16ₙ (including the clones of the virtual machines 16₁ to 16ₙ) used by the user in accordance with the use form, the use frequency, the use method, and the like of the virtual machines 16₁ to 16ₙ.

In order for the user to generate clones (copies) of virtual machines 16₁ to 16ₙ that are the same as the virtual machines 16₁ to 16ₙ, the user inverts a virtual machine name for which the clone is to be generated out of virtual machine names displayed in the virtual machine name display area 28c of the user virtual machine list screen illustrated in Fig. 28 and then clicks on the clone generation button 28o. When the clone generation button 28o is clicked, a clone generation screen as illustrated in Fig. 13 is displayed on the displays 23 of the user servers 19₁ to 19ₙ (refer to Fig. 13). The user inputs the number of clones as described with reference to the clone generation screen illustrated in Fig. 13 and then clicks on the clone execution button.

When the clone execution button is clicked, although not illustrated in the figure, a clone confirmation screen is displayed on the displays 23 of the user servers 19₁ to 19ₙ. On the clone confirmation screen, a virtual machine name display area in which a virtual machine name of the clone source is displayed, a capacity display area in which the number of CPUs of the clone, the memory size, the disk capacity, and the OS template are displayed, a clone confirmation button, and a cancel button are displayed.

When the clone confirmation button is clicked, the system 10 (the management machine 21) generates the clones of the virtual machines 16₁ to 16ₙ on the physical servers (clone generating means) and assigns the generated clones of the virtual machines 16₁ to 16ₙ to the user (second virtual machine assigning means). The management machine 21 generates a predetermined IP address for each one of the clones of the virtual machines 16₁ to 16ₙ assigned by the second virtual machine assigning means and sets the generated IP addresses to the virtual machines 16₁ to 16ₙ (second IP address setting means).

The management machine 21 stores the user identifier, the virtual machine name of the clone source, and the virtual machine name of the clone (for example, a machine name + clone 1, a machine name + clone 2, or the like) in the hard disk in the state being associated with one another and stores the user identifier and the number of CPUs, the memory size, the number of disks, the disk capacity, the OS template, the global network address, the private network address, and the IP address of the clone in the hard disk in the state being associated with each other. On the displays 23 of the user servers 19₁ to 19ₙ, the user virtual machine list screen illustrated in Fig. 28 is displayed again. A user can freely remove the clones of the virtual machines 16₁ to 16ₙ used by the user in accordance with the use form, the use frequency, the use method, and the like of the virtual machines 16₁ to 16ₙ.

Next, in a case where a console function is set to the virtual machine 16₁ to 16ₙ and the clones that have been assigned, the user inverts a virtual machine name to which the console function is to be set out of the virtual machine names displayed in the virtual machine name display area 28c of the user virtual machine list screen illustrated in Fig. 28 and then clicks on the console function button 28p. When the console function button 28p is clicked, the system 10 (management machine 21) sets the console function to the virtual machines 16₁ to 16ₙ or the clones thereof that are console function setting targets (console function setting means).

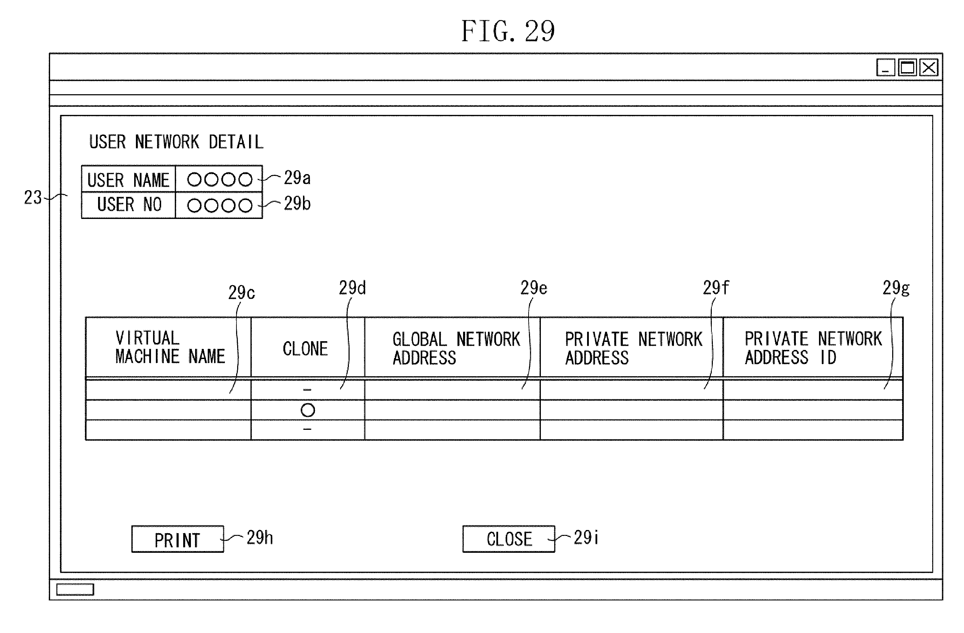

Fig. 29 is a diagram that illustrates an example of a user network detail screen displayed on the displays 23 of the user servers 19₁ to 19ₙ. In a case where user network details are to be displayed, the user clicks on the network detail button 27d on the user initial screen illustrated in Fig. 27. When the network detail button 27d is clicked, on the displays 23 of the user servers 19₁ to 19ₙ, a user network detail screen (including details of the network of each user that has been changed) illustrated in Fig. 29 is displayed (network visualizing means). In addition, in the user servers 19₁ to 19ₙ, only details of the network to which the virtual machines 16₁ to 16ₙ assigned to the user having the user servers 19₁ to 19ₙ are connected are displayed (visualized), but details of networks of the other users are not displayed (non-visualized).

On the user network detail screen illustrated in Fig. 29, a user name display area 29a in which a user name is displayed, a user number display area 29b in which a user No. is displayed, a virtual machine name display area 29c in which a virtual machine name is displayed, a clone display area 29d that represents whether the virtual machines is a clone, a global network address area 29e in which a global network address is displayed, a private network address display area 29f in which a private network address is displayed, a private network ID display area 29g in which a private network ID is displayed, a print button 29h, and a close button 29i are displayed. When the print button 29h is clicked, network details displayed on the user network detail screen are printed through the printer. When the close button 29i is clicked, the screen is returned to the user initial screen illustrated in Fig. 27. By checking the use network detail screen illustrated in Fig. 29, a user can acquire the network details of the virtual machines 16₁ to 16ₙ used by the user.

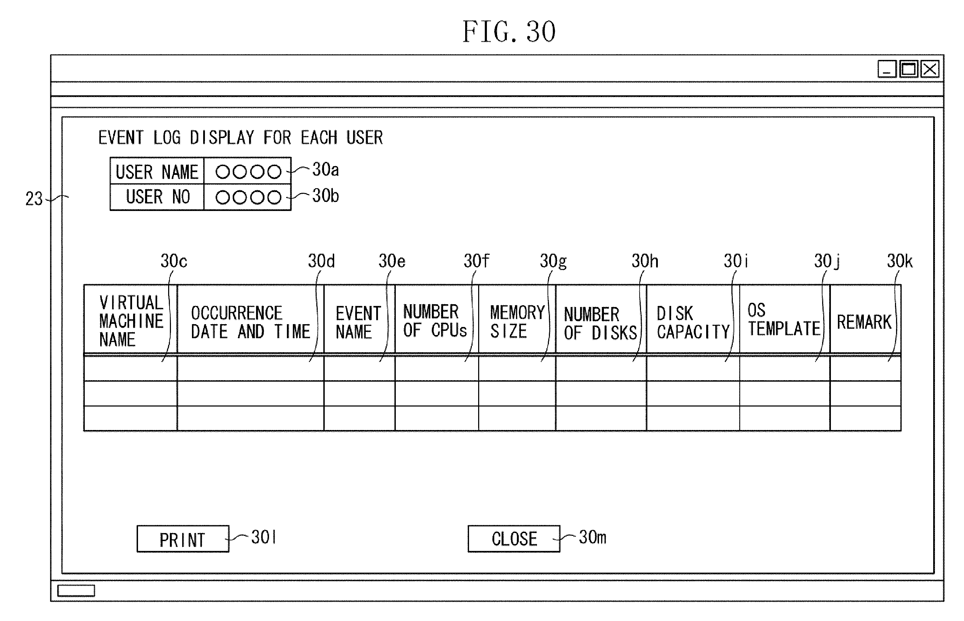

Fig. 30 is a diagram that illustrates an example of an event log display screen for each user that is displayed on the displays 23 of the user servers 19₁ to 19ₙ. In a case where an even log for each user is to be displayed, the user clicks on the event log display button 27e on the user initial screen illustrated in Fig. 27. When the event log display button 27e is clicked, on the displays 23 of the user servers 19₁ to 19ₙ, the event log display screen for each user that is illustrated in Fig. 30 is displayed. In the user servers 19₁ to 19ₙ, only event logs of the virtual machines 16₁ to 16ₙ assigned to the user having the user servers 19₁ to 19ₙ are displayed (visualized), but event logs of the virtual machines 16₁ to 16ₙ of the other users are not displayed (non-visualized).

On the event log display screen for each user that is illustrated in Fig. 30, a user name display area 30a in which a user name is displayed, a user number display area 30b in which a user No. is displayed, a virtual machine name display area 30c in which a virtual machine name is displayed, an occurrence date and time display area 30d in which an event occurrence date and time is displayed, an event name display area 30e in which an event name is displayed, a CPU number display area 30f in which the number of CPUs is displayed, a memory size display area 30g in which a memory size is displayed, a disk number display area 30h in which the number of disks is displayed, a disk capacity display area 30i in which a disk capacity is displayed, an OS template display area 30j in which an OS template is displayed, a remark display area 30k, a print button 301, and a close button 30m are displayed. When the print button 301 is clicked, an event log displayed on the event log display screen for each user is printed through the printer. When the close button 30m is clicked, the screen is returned to the initial screen illustrated in Fig. 27. By checking the event log display screen illustrated in Fig. 30, a user can acquire the events of the virtual machines 16₁ to 16ₙ used by the user.

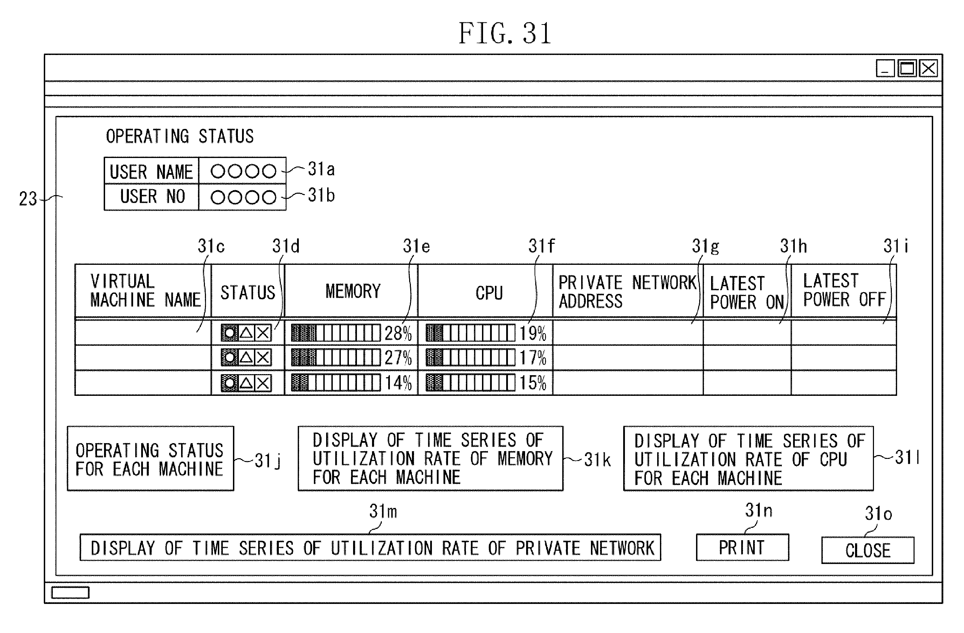

Fig. 31 is a diagram that illustrates an example of a user operating status display screen illustrated on the displays 23 of the user servers 19₁ to 19ₙ. In a case where a user operating status is to be displayed, the user clicks on the operating status display button 27f on the user initial screen illustrated in Fig. 27. When the operating status display button 27f is clicked, on the displays 23 of the user servers 19₁ to 19ₙ, the user operating status display screen illustrated in Fig. 31 is displayed. In the user servers 19₁ to 19ₙ, only the operating statuses of the virtual machines 16₁ to 16ₙ assigned to the user having the user servers 19₁ to 19ₙ are displayed (visualized), but the operating statuses of the virtual machines 16₁ to 16ₙ of the other users are not displayed (non-visualized).

On the user operating status display screen illustrated in Fig. 31, a user name display area 31a in which a user name is displayed, a user number display area 31b in which a user No. is displayed, a virtual machine name display area 31c in which a virtual machine name is displayed, a state display area 31d in which a machine state is displayed, a memory use status display area 31e in which a memory use status is displayed, a CPU use status display area 31f in which a CPU use status is displayed, a private network address display area 31g in which a private network address is displayed, a latest power on date and time display area 31h in which a latest power-on date and time is displayed, and a latest power off date and time display area 31i in which a latest power off date and time is displayed are displayed. In addition, an operating status display button 31j for each virtual machine, a memory use rate time-series display button 31k for each virtual machine, a CPU use rate time-series display button 311 for virtual each machine, a private network use rate time-series display button 31m, a print button 31n, and a close button 31o are displayed. When the print button 31n is clicked, the operating statuses of the virtual machines 16₁ to 16ₙ on the user operating status display screen are printed through the printer. When the close button 31o is clicked, the screen is returned to the user initial screen illustrated in Fig. 27. By checking the user operating status display screen illustrated in Fig. 31, a user can acquire the operating statuses of the virtual machines 16₁ to 16ₙ used by the user.

In the state display area 31d, the states of the virtual machines 16₁ to 16ₙ are displayed. Here, "○" displayed in the state display area 31d represents a good state, "Δ" displayed in the state display area 31d represents an attentive state, and "×" displayed in the state display area 31d represents a defective state. Alternatively, similar to the traffic light, it may be configured such that a blue display is used in a case where the state is good, a yellow display is used in a case where the state is attentive, and a red display is used in a case where the state is defective. In the memory use status display area 31 e, the current memory use rates of the virtual machines 16₁ to 16ₙ are displayed, and, in the CPU use status display area 31f, the current CPU use rates of the virtual machines 16₁ to 16ₙ are displayed. In the latest power-on date and time display area 31h, the latest date and time of power-on in each one of the virtual machines 16₁ to 16ₙ is displayed, and, in the latest power-off date and time display area 31 i, the latest date and time of power-off in each one of the virtual machines 16₁ to 16ₙ is displayed.

In a case where the operating status for each machine of the virtual machines 16₁ to 16ₙ is to be displayed, the user inverts a machine name of the operating status display target out of machine names displayed in the virtual machine name display area 31c of the user operating status display screen illustrated in Fig. 31 and clicks on the operating status display button 31j for each machine. When the operating status display button 31j for each machine is clicked, on the display 23 of the user servers 19₁ to 19ₙ, the operating status display screen as illustrated in Fig. 22 is displayed (operating status visualizing means).

On the operating status display screen for each machine, a user name display area in which a user name is displayed, a user number display area in which a user No. is displayed, a virtual machine name display area in which a virtual machine name is displayed, a state display area in which a machine state is displayed, a memory use status display area in which a memory use status is displayed, a CPU use status display area in which a CPU use status is displayed, an operating time display area in which an operating time of a virtual machine is displayed, a private network use rate display area in which a private network use rate is displayed, a display date and time display area in which display date and time is displayed, and a redisplay button are displayed. In addition, a memory size display area in which a memory size is displayed, a CPU number display area in which the number of CPUs is displayed, a disk number display area in which the number of disks is displayed, a disk capacity display area in which a disk capacity is displayed, a print button, and a close button are displayed (refer to Fig. 22). By checking the operating status display screen for each machine, the user can acquire the operating statuses of the virtual machines 16₁ to 16ₙ.

In a case where the memory use rate for each machine of the virtual machines 16₁ to 16ₙ is to be displayed in a time series, the user inverts a machine name of the memory use rate display target out of machine names displayed in the virtual machine name display area 31c of the user operating status display screen illustrated in Fig. 31 and then clicks on the memory use rate time-series display button 31k for each machine. When the memory use rate time-series display button 31k for each machine is clicked, on the displays 23 of the user servers 19₁ to 19ₙ, a memory use rate time-series display screen for each machine as illustrated in Fig. 23 is displayed (operating status virtualizing means). On the memory use rate time-series display screen for each machine, a user name display area in which a user name is displayed, a user number display area in which a user No. is displayed, a virtual machine name display area in which a virtual machine name is displayed, and a memory use rate graph representing the memory use rate of the virtual machine in a time series are displayed, and a print button and a close button are displayed (refer to Fig. 23). By checking the memory use rate time-series display screen for each machine, the user can acquire the memory use rates of the past to the present for the virtual machines 16₁ to 16ₙ in time series.

In a case where the CPU use rate for each machine of the virtual machines 16₁ to 16ₙ is to be displayed in a time series, the user inverts a machine name of the CPU use rate display target out of machine names displayed in the virtual machine name display area 31c of the user operating status display screen illustrated in Fig. 31 and then clicks on the CPU use rate time-series display button 311 for each machine. When the CPU use rate time-series display button 311 for each machine is clicked, on the displays 23 of the user servers 19₁ to 19ₙ, a CPU use rate time-series display screen for each machine as illustrated in Fig. 24 is displayed (operating status virtualizing means). On the CPU use rate time-series display screen for each machine, a user name display area in which a user name is displayed, a user number display area in which a user No. is displayed, a virtual machine name display area in which a virtual machine name is displayed, and a CPU use rate graph representing the CPU use rate of the virtual machine in a time series are displayed, and a print button and a close button are displayed (refer to Fig. 24). By checking the CPU use rate time-series display screen for each machine, the user can acquire the CPU use rates of the past to the present for the virtual machines 16₁ to 16ₙ in time series.

In a case where the private network use rate is to be displayed in a time series, the user inverts a private network address (or a machine name) of the private network use rate display target out of private network addresses (or machine names) displayed in the private network address name display area 31g (or the virtual machine name display area 31 c) of the user operating status display screen illustrated in Fig. 31 and then clicks on the private network use rate time-series display button 31m. When the private network use rate time-series display button 31m is clicked, on the displays 23 of the user servers 19₁ to 19ₙ, a private network use rate time-series display screen as illustrated in Fig. 25 is displayed (operating status virtualizing means).

On the private network use rate time-series display screen, a user name display area in which a user name is displayed, a user number display area in which a user No. is displayed, a private network address display area in which a private network address is displayed, and a private network use rate graph representing the private network use rate of the private network in a time series are displayed, and a print button and a close button are displayed. By checking the private network use rate time-series display screen, the user can acquire the private network use rates of the past to the present for the virtual machines 16₁ to 16ₙ in time series.

According to the system 10 for providing virtual machines, the memory use rates of the virtual machines 16₁ to 16ₙ are individually displayed for each user, and accordingly, each user can acquire the memory use rates of the virtual machines 16₁ to 16ₙ, thereby accurately determining the maintenance of the memories of the virtual machines 16₁ to 16ₙ and an increase/decrease in the memories. In addition, according to the system 10, since the memory use rates of the virtual machines 16₁ to 16ₙ are configured not to be visible to the other users, the memory use rates of the virtual machines 16₁ to 16ₙ are not acquired by the other users, and the memory use status of each user can be kept in secret, and thereby the other users are prevented from arbitrarily increasing/decreasing the memories of the virtual machines 16₁ to 16ₙ.

According to the system 10 for providing virtual machines, the CPU use rates of the virtual machines 16₁ to 16ₙ are individually displayed for each user, and accordingly, each user can acquire the CPU use rates of the virtual machines 16₁ to 16ₙ, thereby accurately determining the maintenance of the number of CPUs of the virtual machines 16₁ to 16ₙ and an increase/decrease in the number of CPUs. In addition, according to the system 10, since the CPU use rates of the virtual machines 16₁ to 16ₙ are configured not to be visible to the other users, the CPU use rates of the virtual machines 16₁ to 16ₙ are not acquired by the other users, and the CPU use status of each user can be kept in secret, and thereby the other users are prevented from arbitrarily increasing/decreasing the number of CPUs of the virtual machines 16₁ to 16ₙ.

According to the system 10 for providing virtual machines, the private network use rates of the virtual machines 16₁ to 16ₙ are individually displayed for each user, and accordingly, each user can acquire the private network use rates of the virtual machines 16₁ to 16ₙ, thereby accurately determining the maintenance of the private networks of the virtual machines 16₁ to 16ₙ and the addition or removal of the private networks. In addition, according to the system 10, since the private network use rates of the virtual machines 16₁ to 16ₙ are configured not to be visible to the other users, the private network use rates of the virtual machines 16₁ to 16ₙ are not acquired by the other users, and the private network use status of each user can be kept in secret, and thereby the other users are prevented from arbitrarily adding/removing the private network.

According to the system 10 for providing virtual machines, the operating time and the on/off date and time of each one of the virtual machines 16₁ to 16ₙ are individually displayed for each user, and accordingly, each user can acquire the operating time and the on/off date and time of each one of the virtual machines 16₁ to 16ₙ, thereby accurately determining the addition/removal of the virtual machines 16₁ to 16ₙ or the addition, change, or removal of the capacities of the virtual machines 16₁ to 16ₙ. In addition, according to the system 10, since the operating time and the on/off date and time of each one of the virtual machines 16₁ to 16ₙ are configured not to be visible to the other users, the operating time and the on/off date and time of each one of the virtual machines 16₁ to 16ₙ are not acquired by the other users, and the use status of the virtual machines 16₁ to 16ₙ in each user can be kept in secret, and thereby the other users are prevented from arbitrarily adding/removing the virtual machines 16₁ to 16ₙ or adding, changing, or removing the capacities of the virtual machines 16₁ to 16ₙ.

### Reference Signs List

- 10: System for providing virtual servers
- 11: Physical security router
- 11₁ to 11ₙ: Physical security router
- 12: Physical firewall
- 12₁ to 12ₙ: Physical firewall
- 13: Physical server
- 13₁ to 13ₙ: Physical server
- 14₁ to 14ₙ: 1st to n-th virtual router
- 15₁ to 15ₙ: 1st to n-th virtual firewall
- 16₁ to 16ₙ: Virtual machine
- 17₁ to 17ₙ: Global network
- 18₁ to 18ₙ: Private network
- 19₁ to 19ₙ: User server
- 20: Internet
- 21: Management machine

## Claims

1. A system for providing virtual machines that provides the virtual machines virtualized on a physical server for each user, the system comprising:
first to n-th virtual routers that are virtualized on at least one physical router;
first to n-th virtual firewalls that are individually connected to the first to n-th virtual routers through global networks and are virtualized on at least one physical firewall; and
a plurality of virtual machines that are connected to the first to n-th virtual firewalls through private networks and are virtualized on at least one physical server,
wherein the system for providing the virtual machines executes a virtual machine generating means for generating the virtual machines on the physical server in accordance with a request of the user and a first virtual machine assigning means for assigning the generated virtual machines to the user.

2. The system for providing the virtual machines according to claim 1, further comprising a capacity setting means for setting capacities of the virtual machines generated by the virtual machine generating means for the virtual machines.

3. The system for providing the virtual machines according to claim 1 or 2, further comprising a first IP address setting means for generating predetermined IP addresses for the virtual machines assigned by the first virtual machine assigning means and setting the generated IP addresses respectively to the virtual machines.

4. The system for providing the virtual machines according to claim 2 or 3, further comprising a first capacity visualizing means for allowing the capacities of the virtual machines assigned by the first virtual machine assigning means to be individually visualized for each user and allowing the capacities to be non-visible to the other users.

5. The system for providing the virtual machines according to any one of claims 1 to 4, further comprising a first virtual machine removing means for removing unnecessary virtual machines out of the virtual machines assigned by the first virtual machine assigning means in accordance with a request of the user.

6. The system for providing the virtual machines according to any one of claims 1 to 5, further comprising:
a clone generating means for generating clones of virtual machines that are the same as the virtual machines that have already been generated in accordance with a request of the user;
a second virtual machine assigning means for assigning the generated clones of the virtual machine to the user; and
a second IP address setting means for generating predetermined IP addresses for the clones of the virtual machines assigned by the second virtual machine assigning means and individually sets the generated IP addresses to the clones of the virtual machines.

7. The system for providing the virtual machines according to claim 6, further comprising a second capacity visualizing means for allowing the capacities of the clones of the virtual machines assigned by the second virtual machine assigning means to be individually visualized for each user and allowing the capacities to be non-visible to the other users.

8. The system for providing the virtual machines according to claim 6 or 7, further comprising a second virtual machine removing means for removing unnecessary clones of virtual machines out of the clones of the virtual machines assigned by the second virtual machine assigning means in accordance with a request of the user.

9. The system for providing the virtual machines according to any one of claims 6 to 8, further comprising a private network setting means for setting a private network connecting the virtual firewalls, the virtual machines, and the clones together in accordance with a request of the user.

10. The system for providing the virtual machines according to claim 9, wherein the private network setting means divides the virtual machines and the clones connected to a specific virtual firewall into two or more groups in accordance with a request of the user and sets a plurality of the private networks that connect the virtual firewalls and the groups together.

11. The system for providing the virtual machines according to claim 9 or 10, further comprising a private network changing means that adds, changes, or removes the private network connecting the virtual firewalls, the virtual machines, and the clones together in accordance with a request of the user.

12. The system for providing the virtual machines according to any one of claims 6 to 11, further comprising a console function setting means for setting a console function to the virtual machines and the clones in accordance with a request of the user.

13. The system for providing the virtual machines according to any one of claims 6 to 11, wherein the capacities of the virtual machines and the clones are the numbers of central processing units used therein, the system further comprising:
a capacity changing means for subsequently increasing or decreasing the number of the central processing units in accordance with a request of the user; and
a capacity change visualizing means for allowing the numbers of the central processing units, which have been increased or decreased by the capacity changing means, to be individually visualized for each user and allowing the numbers of the central processing units to be non-visible to the other users.

14. The system for providing the virtual machines according to claim 13,
wherein the capacities of the virtual machines and the clones are memory sizes of the virtual machines and the clones,
the capacity changing means subsequently increases or decreases the memory sizes in accordance with a request of the user, and
a capacity change visualizing means allows the memory sizes, which have been increased or decreased by the capacity changing means, to be individually visualized for each user and allows the memory sizes to be non-visible to the other users.

15. The system for providing the virtual machines according to claim 13 or 14,
wherein the capacities of the virtual machines and the clones are the capacities of hard disks used therein,
the capacity changing means subsequently increases or decreases the capacities of the hard disks in accordance with a request of the user, and
the capacity change visualizing means allows the capacities of the hard disks, which have been increased or decreased by the capacity changing means, to be individually visualized for each user and allows the capacities of the hard disks to be non-visible to the other users.

16. The system for providing the virtual machines according to any one of claims 6 to 15, further comprising an operating status visualizing means for allowing operating statuses of the virtual machines and the clones assigned to the users to be individually visualized for each user and allowing the operating statuses to be non-visible to the other users.

17. The system for providing the virtual machines according to claim 16,
wherein the operating statuses of the virtual machines and the clones are past or present memory use rates of each one of the virtual machines and each one of the clones, and
the operating status visualizing means allows the memory use rates to be individually visualized for each user and allows the memory use rates to be non-visible to the other users.

18. The system for providing the virtual machines according to claim 17, wherein the operating status visualizing means visualizes the memory use rates in time series.

19. The system for providing the virtual machines according to any one of claims 16 to 18,
wherein the operating statuses of the virtual machines and the clones are past or present use rates of central processing units of each one of the virtual machines and each one of the clones, and
the operating status visualizing means allows the use rates of the central processing units to be individually visualized for each user and allowing the use rates to be non-visible to the other users.

20. The system for providing the virtual machines according to claim 19, wherein the operating status visualizing means visualizes the use rates of the central processing units in time series.

21. The system for providing the virtual machines according to any one of claims 16 to 20,
wherein the operating statuses of the virtual machines and the clones are past or present private network use rates of each one of the virtual machines and each one of the clones, and
the operating status visualizing means allows the private network use rates to be individually visualized for each user and allows the network use rates to be non-visible to the other users.

22. The system for providing the virtual machines according to claim 21, wherein the operating status visualizing means visualizes the private network use rates in time series.

23. The system for providing the virtual machines according to any one of claims 16 to 22,
wherein the operating statuses of the virtual machines and the clones are an operating time, latest power-on date and time, and latest power-off date and time of each one of the virtual machines and each one of the clones, and
the operating status visualizing means allows the operating time, the power-on date and time, and the power-off date and time to be individually visualized for each user and allows the operating time, the power-on date and time, and the power-off date and time to be non-visible to the other users.
